(19) Europäisches Patentamt
European Patent Office
Office européen des brevets

(11) **EP 3 570 224 A1**

(12) **EUROPEAN PATENT APPLICATION**

(43) Date of publication:
**20.11.2019 Bulletin 2019/47**

(51) Int Cl.:
***G06Q 10/04*** *(2012.01)*     ***G06Q 50/06*** *(2012.01)*

(21) Application number: **19161599.6**

(22) Date of filing: **08.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.05.2018 JP 2018094651**

(71) Applicant: **Hitachi, Ltd.**
**Tokyo 100-8280 (JP)**

(72) Inventors:
• **IKEMOTO, Yu**
**Chiyoda-ku, Tokyo 100-8280 (JP)**

• **UTSUMI, Masato**
**Chiyoda-ku, Tokyo 100-8280 (JP)**
• **WATANABE, Tohru**
**Chiyoda-ku, Tokyo 100-8280 (JP)**
• **SHIGEMORI, Ikuo**
**Chiyoda-ku, Tokyo 100-8280 (JP)**

(74) Representative: **Mewburn Ellis LLP**
**City Tower**
**40 Basinghall Street**
**London EC2V 5DE (GB)**

Remarks:
Amended claims in accordance with Rule 137(2) EPC.

(54) **POWER PLAN SUPPORTING APPARATUS**

(57) According to one embodiment, a power plan supporting apparatus provided for planning a power plan based on time series data regarding the power plan includes a time series classification unit that classifies the time series data into a group of periods in which input conditions are same or similar to each other in an optimization of the power plan, a representative data determination unit that determines representative data for each group classified by the time series classification unit, and a period evaluation value estimation unit that calculates an evaluation value of all the periods by integrating the evaluation value for each representative data determined by the representative data determination unit.

*FIG. 1*

EP 3 570 224 A1

**Description**

BACKGROUND OF THE INVENTION

1. Field of the Invention

The present invention relates to a power plan supporting apparatus, and is suitable for use in a power plan supporting apparatus for planning a power plan based on time series data regarding power plan, for example.

2. Description of Related Art

In the field of electric power, when the optimization of the power plan such as supply of power and setting of electricity charge is performed regarding a long period of time, the variables, constraint conditions, and the like that are used for the optimization increase, and an enormous amount of calculation is required.

Recently, an information processing apparatus that reduces the amount of calculation has been disclosed (see Japanese Unexamined Patent Publication No. 2016-71383). When performing multi-agent simulation optimization, the information processing apparatus can prevent unnecessary consumption of the calculation resources by interrupting a certain scenario among a plurality of scenarios, when evaluation of the scenario at the final time point is predicted to be bad during the simulation.

When planning a power plan such as supply of power, setting of electricity charge, and the like, an estimation value of power demand for the planning period is used, but in the case of executing a long term power plan, even when the period with the same optimized result is included, the method described in Japanese Unexamined Patent Publication No. 2016-71383 redundantly performs the calculation, and as a result, calculation process is wasted for the overlapped parts, and efficient use of calculation resources may not be provided.

SUMMARY OF THE INVENTION

The present invention has been made in view of the issues mentioned above, and is accordingly intended to propose a power plan supporting apparatus that can more efficiently utilize calculation resources when planning a power plan.

To solve such a problem, the present invention provides a power plan supporting apparatus for planning a power plan based on time series data regarding power plan, which may include a time series classification unit that classifies the time series data into a group of periods in which input conditions are same or similar to each other in an optimization of the power plan, a representative data determination unit that determines representative data for each group classified by the time series classification unit, and a period evaluation value estimation unit that calculates an evaluation value of all the periods by integrating the evaluation value for each representative data determined by the representative data determination unit.

According to the above configuration, for example, optimization is performed on representative data in a period in which optimization input conditions are the same or similar, and the evaluation values of the representative data are integrated to obtain the evaluation value of all the periods, and accordingly, it is possible to omit overlapping calculation process for the period in which the input conditions are the same or similar, thereby reducing calculation resources used for optimization.

According to the present invention, a highly reliable power plan supporting apparatus can be realized.

BRIEF DESCRIPTION OF THE DRAWINGS

FIG. 1 is a diagram illustrating an example of a configuration of a power plan supporting apparatus according to a first embodiment;
FIG. 2 is a diagram illustrating an example of a power plan supporting function according to the first embodiment;
FIG. 3 is a diagram illustrating an example of an electricity charge information table according to the first embodiment;
FIG. 4 is a diagram illustrating an example of a consumer information table according to the first embodiment;
FIG. 5 is a diagram illustrating an example of a demand prediction information table according to the first embodiment;
FIG. 6 is a diagram illustrating an example of a power amount charge table according to the first embodiment;
FIG. 7 is a diagram illustrating an example of a consumer classification information table according to the first embodiment;
FIG. 8 is a diagram illustrating an example of other company's charge menu information table according to the first embodiment;

FIG. 9 is a diagram illustrating an example of a demand variation typical information table according to the first embodiment;

FIG. 10 is a diagram illustrating an example of a generator information table according to the first embodiment;

FIG. 11 is a diagram illustrating an example of a market condition prediction information table according to the first embodiment;

FIG. 12 is a diagram illustrating an example of an optimization result storage table according to the first embodiment;

FIG. 13 is a diagram illustrating an example of a charge unit price storage table according to the first embodiment;

FIG. 14 is a diagram illustrating an example of a similar date classification information table according to the first embodiment;

FIG. 15 is a diagram illustrating an example of power plan supporting process according to the first embodiment;

FIG. 16 is a diagram illustrating an example of profit maximization process according to the first embodiment;

FIG. 17 is a diagram illustrating an example of demand variation estimation process according to the first embodiment;

FIG. 18 is a diagram illustrating an example of a long-term plan planning process according to the first embodiment;

FIG. 19 is a conceptual diagram of demand variation typical information for each consumer according to the first embodiment;

FIG. 20 is a diagram illustrating an example of a result of performing an optimization calculation for obtaining a combination of supply sources and outputs with minimum cost for power procurement according to the first embodiment;

FIG. 21 is a diagram illustrating an example of clustering classification of total demand prediction time series data of each day according to the first embodiment; and

FIGS. 22A and 22B are diagrams illustrating examples of a characteristic configuration of a power plan supporting apparatus according to the first embodiment.

DESCRIPTION OF EMBODIMENTS

Descriptions of embodiments of the invention will be given with reference to the drawings.

(1) First Embodiment

In the present embodiment, a method for optimizing a plan (power plan) related to supply of power, setting of electricity charge, and the like in the field of electric power will be described. Hereinafter, a description will be given of a method for saving calculation resources by reducing overlapping calculation process in each period, based on identity and/or similarity of the input conditions of each period for which the power plan is set up.

(1-1) Configuration of Power Plan Supporting Apparatus According to Present Embodiment

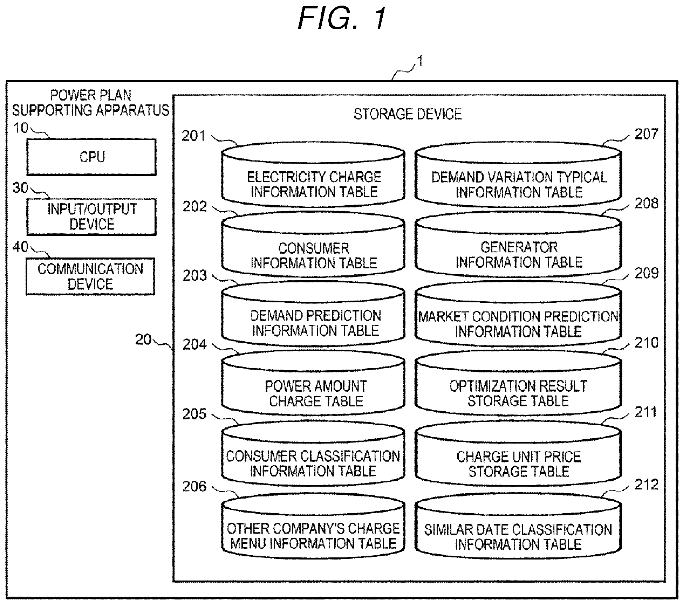

In FIG. 1, a reference numeral 1 denotes a power plan supporting apparatus according to the present embodiment as a whole. The power plan supporting apparatus 1 is a device for planning a power plan based on time series data regarding the power plan, and includes a Central Processing Unit (CPU) 10, a storage device 20, an input/output device 30, a communication device 40, and the like. It should be noted that the power plan supporting apparatus 1 may be a local server installed at a specific location or a cloud server.

The CPU 10 is a processor that controls the overall operation of the power plan supporting apparatus 1. The storage device 20 is formed of a semiconductor memory and the like, and is mainly used for storing and holding various programs. By executing the program stored in the storage device 20 by the CPU 10, various process of the power plan supporting apparatus 1 as a whole are executed as described below. The storage device 20 includes a database for managing necessary information, including an electricity charge information table 201, a consumer information table 202, a demand prediction information table 203, a power amount charge table 204, a consumer classification information table 205, other company's charge menu information table 206, a demand variation typical information table 207, a generator information table 208, a market condition prediction information table 209, an optimization result storage table 210, a charge unit price storage table 211, a similar date classification information table 212, and the like. Each table will be described below in detail.

The input/output device 30 includes an input device and an output device. The input device is hardware for the user to input various operations, such as a keyboard, a mouse, a touch panel, and the like, for example. The output device is hardware for outputting images, sounds, and the like, such as a liquid crystal display, a speaker, and the like, for example. The communication device 40 has a function of communicating with an external terminal by a communication method conforming to a predetermined communication standard.

(1-2) Power Plan Supporting Function by Power Plan Supporting Apparatus 1

Next, the power plan supporting function installed in the power plan supporting apparatus 1 will be described. The power plan supporting function has a function of collecting electricity charge data including a unit price (charge unit price) of a time series electricity charge and demand prediction time series data (power consumption amount data) of time series of consumers who consume power. The power plan supporting function has a function of estimating a variation in future demand according to a change in electricity charge based on the collected electricity charge data and demand prediction time series data. The power plan supporting function has a function of extracting electricity charges that maximize a prediction value of profit by simultaneously considering the income by electric sales and the cost for power procurement. The power plan supporting function has a function of classifying similar dates and determining a representative case based on the classification results of the similar dates. The power plan supporting function has a function of performing optimization calculation for representative case and integrating the results of optimization calculation, thereby optimizing a long term plan.

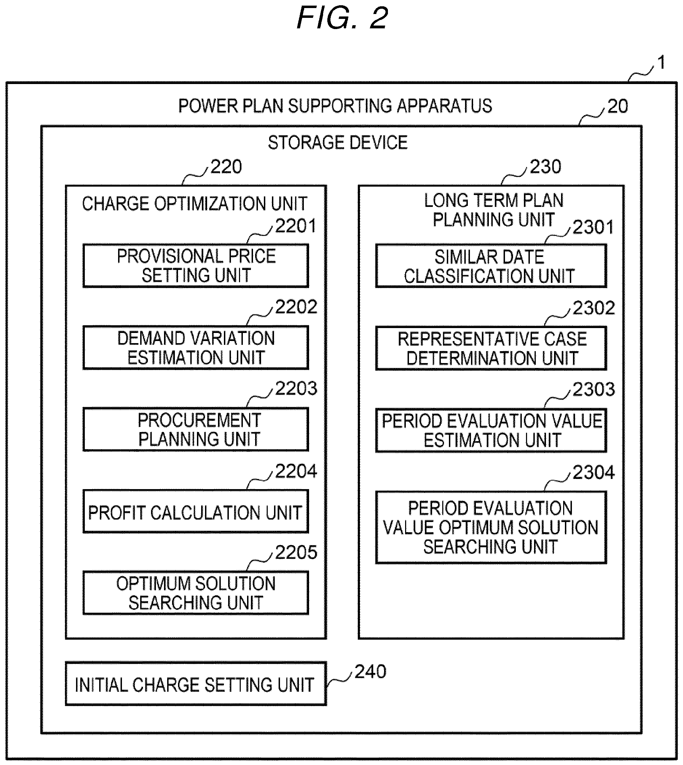

As a means of realizing such a power plan supporting function, as illustrated in FIG. 2, a charge optimization unit 220, a long term plan planning unit 230, an initial charge setting unit 240 and the like are stored in the storage device 20 of the power plan supporting apparatus 1, as a program.

The charge optimization unit 220 is a program for realizing the function of optimizing the electricity charging and includes a provisional charge setting unit 2201, a demand variation estimation unit 2202, a procurement planning unit 2203, a profit calculation unit 2204, and an optimum solution searching unit 2205.

The provisional charge setting unit 2201 is a module having a function of estimating changed electricity charge. The changed electricity charge (provisional charge) set by the provisional charge setting unit 2201 is input to a demand variation estimation unit 2202 and a profit calculation unit 2204 which will be described below.

The demand variation estimation unit 2202 is a module having a function of estimating a changed demand amount in each time based on the changed electricity charge. The demand amount (demand estimation value) estimated by the demand variation estimation unit 2202 is input to the procurement planning unit 2203 and the profit calculation unit 2204 which will be described below.

The procurement planning unit 2203 is a module having a function of planning a procurement plan corresponding to the demand estimation value. The procurement plan generated by the procurement planning unit 2203 is input to the profit calculation unit 2204 which will be described below.

The profit calculation unit 2204 is a module having a function of calculating profit based on the changed electricity charge, the demand estimation value, and the procurement plan.

The optimum solution searching unit 2205 is a module having a function of determining an electricity charge at which profit is maximized, by using a series of processes of calculating the profit from the setting of the electricity charges in the provisional charge setting unit 2201, the demand variation estimation unit 2202, the procurement planning unit 2203, and the profit calculation unit 2204. The electricity charge determined by the optimum solution searching unit 2205 is stored in the optimization result storage table 210.

The long term plan planning unit 230 is a program for realizing a function of optimizing the electricity charge for a long term period, and includes a similar date classification unit 2301, a representative case determination unit 2302, a period evaluation value estimation unit 2303, and a period evaluation value optimum solution searching unit 2304.

The similar date classification unit 2301 is a module having a function of classifying similar dates based on the demand prediction time series data of each day (area total demand amount) and the electricity charge data of each day (per hour and per charge type) . The classification result determined by the similar date classification unit 2301 is input to the representative case determination unit 2302.

The representative case determination unit 2302 is a module having a function of setting a representative case including a combination of distribution characteristic of the demand prediction time series data (demand pattern) of each day and attributes of the electricity charge data (charge setting type) of each day based on the classification result of the similar date. The representative case set by the representative case determination unit 2302 is input to the period evaluation value estimation unit 2303.

The period evaluation value estimation unit 2303 is a module having a function of invoking the charge optimization unit 220 to calculate profits for each input representative case, and estimating a period profit based on the calculated income and the classification result of the similar dates.

The period evaluation value optimum solution searching unit 2304 is a module having a function of determining the electricity charge at which the period profit is maximized, by using a series of processes of calculating profits from the setting of electricity charges in the charge optimization unit 220 and the period evaluation value estimation unit 2303. The electricity charge determined by the period evaluation value optimum solution searching unit 2304 is stored in the optimization result storage table 210.

The initial charge setting unit 240 is a program having a function of setting an initial electricity charge.

(1-3) Various Information on Power Plan Supporting Function

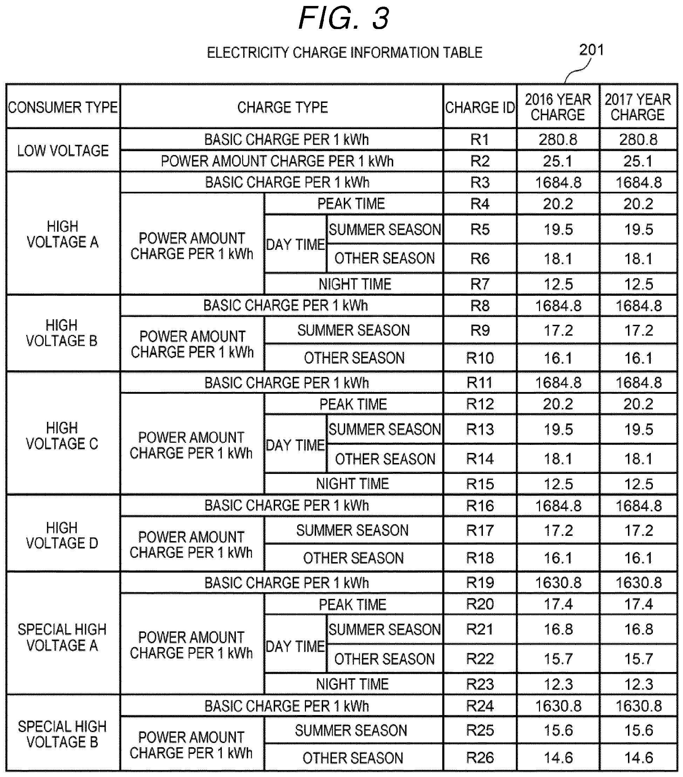

FIG. 3 is a diagram illustrating an example of the electricity charge information table 201. The electricity charge information table 201 stores electricity charge information which includes a basic charge and a power amount charge (meter charge) . For example, in the electricity charge information table 201, a type of electricity charge (charge type) applicable for each consumer type indicating a type that a consumer can contract is set, and a value (charge) for each charge type for each fixed period such as every year is stored. A charge ID that can identify the charge is provided corresponding to the consumer type and the charge type.

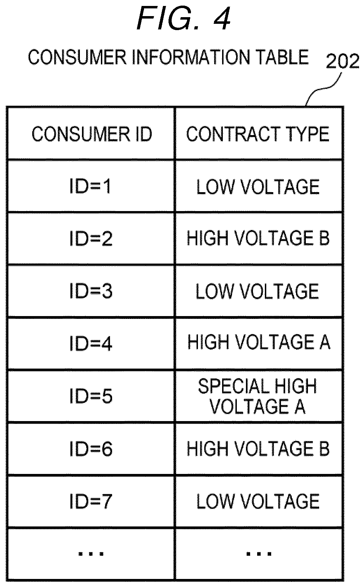

FIG. 4 is a diagram illustrating an example of the consumer information table 202. The consumer information table 202 stores information on a consumer ID that can identify a consumer, and information on a consumer type (contract type) contracted by a consumer in association with each other.

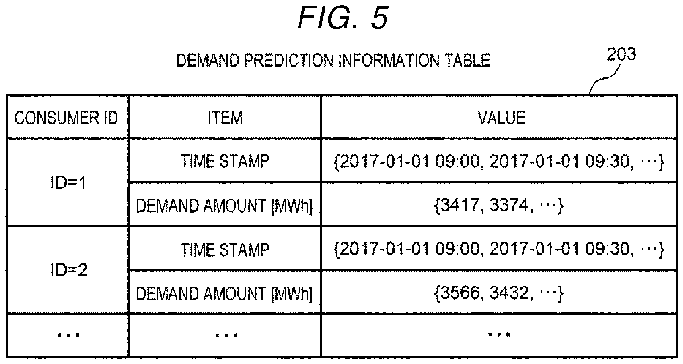

FIG. 5 is a diagram illustrating an example of the demand prediction information table 203. The demand prediction information table 203 stores information on the consumer ID, a time stamp and the demand amount in association with each other. For example, the demand prediction information table 203 stores information on demand by time (in the example, annual demand amount every 30 minutes) for each consumer.

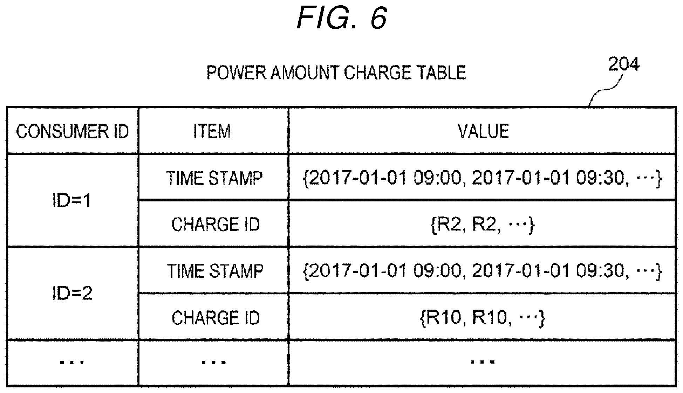

FIG. 6 is a diagram illustrating an example of the power amount charge table 204. The power amount charge table 204 stores information for calculating a charge corresponding to the consumed power. More specifically, the power amount charge table 204 stores information on the consumer ID, the time stamp and the charge ID in association with each other. For example, the power amount charge table 204 stores, for each consumer, information on the time-based charge type of a company (in the example, annual charge ID by every 30 minutes).

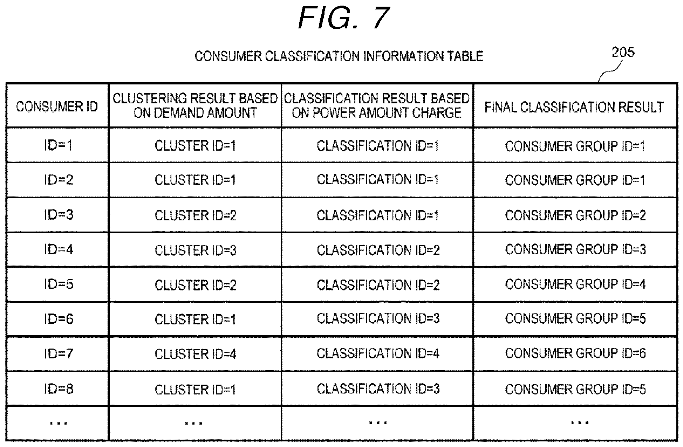

FIG. 7 is a diagram illustrating an example of the consumer classification information table 205. The consumer classification information table 205 stores information on the consumer ID, a cluster ID that can identify the clustering result based on the demand amount, a classification ID that can identify the classification result based on the power amount charge, and a consumer group ID that can identify a consumer group indicating the final classification result in association with each other.

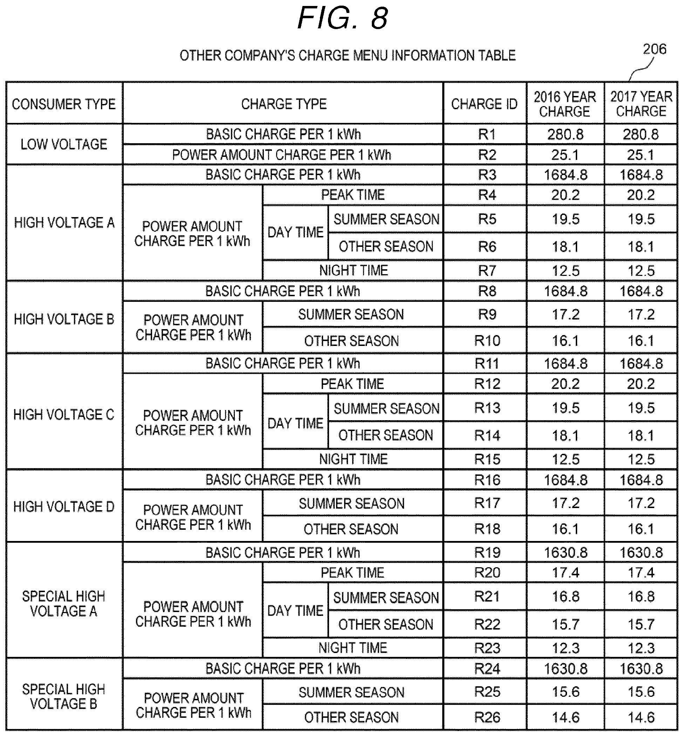

FIG. 8 is a diagram illustrating an example of the other company's charge menu information table 206. The other company's charge menu information table 206 stores information on electricity charges used by the other companies. For example, in the other company's charge menu information table 206, charge types applicable for each consumer type are set, and values (charge) for each charge type for each fixed period such as every year are stored. A charge ID that can identify the charge is provided corresponding to the consumer type and the charge type.

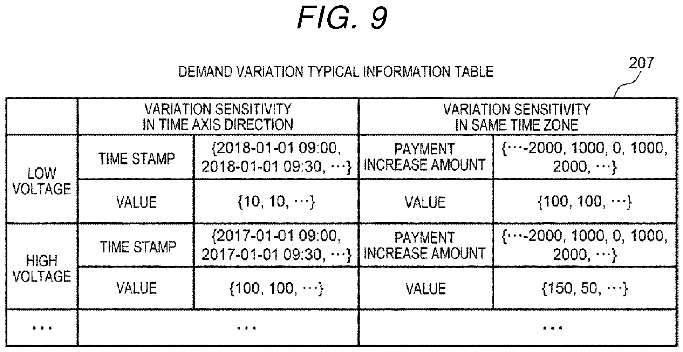

FIG. 9 is a diagram illustrating an example of the demand variation typical information table 207. The demand variation typical information table 207 stores demand variation typical information that estimates characteristics of the consumers. The demand variation typical information is information used for more accurately modeling how much the demand varies depending on the changed electricity charge. Hereinafter, as the demand variation typical information, information (time stamp and value) indicating variation sensitivity in the time axis direction and information (payment increase amount and value) indicating variation sensitivity in the same time zone are explained as an example.

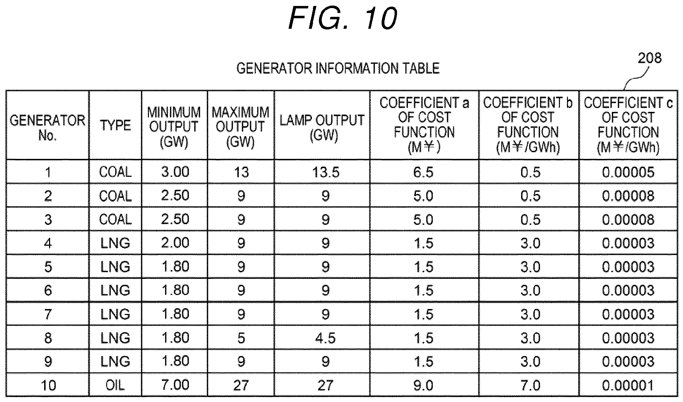

FIG. 10 is a diagram illustrating an example of the generator information table 208. The generator information table 208 stores a generator No. that can identify the generator, a type of the generator, an output (minimum output, maximum output, lamp output) of the generator, and a coefficient for calculating the cost related to the operation of the generator (coefficient of the cost function) in association with each other.

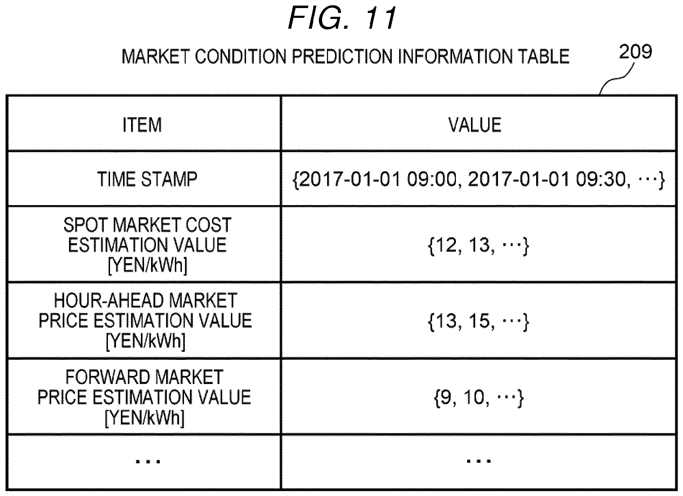

FIG. 11 is a diagram illustrating an example of the market condition prediction information table 209. The market condition prediction information table 209 stores estimation values of future market prices. The market condition prediction information table 209 stores, for example, information on the time stamp, a spot market price estimation value, an hour-ahead market price estimation value, and a forward market price estimation value in association with each other.

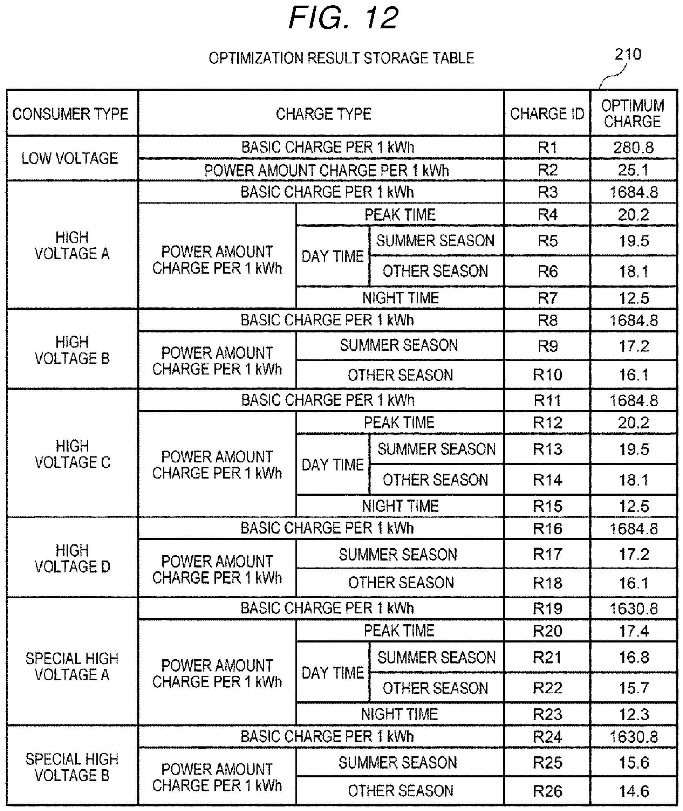

FIG. 12 is a diagram illustrating an example of the optimization result storage table 210. The optimization result storage table 210 stores an optimization result. The optimization result storage table 210 stores, for example, information on a consumer type, a charge type, a charge ID, and an optimum charge in association with each other.

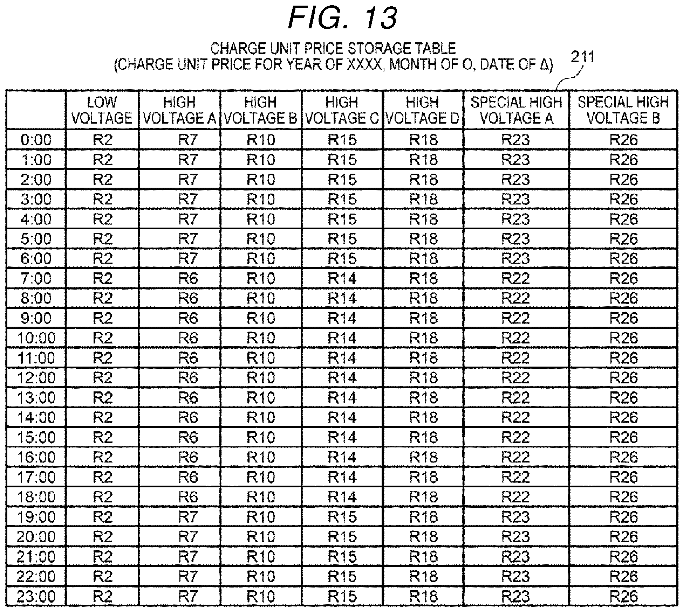

FIG. 13 is a diagram illustrating an example of the charge unit price storage table 211. The charge unit price storage table 211 stores information (charge ID) on a combination of unit price of the power amount charge per hour of a day.

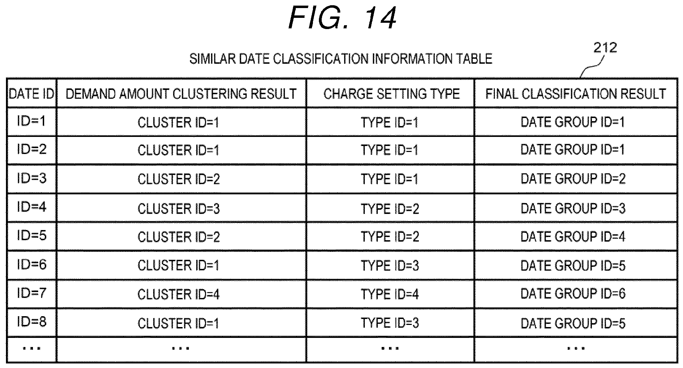

FIG. 14 is a diagram illustrating an example of the similar date classification information table 212. The similar date classification information table 212 stores information on IDs that can identify days, cluster IDs that can identify clustering results based on the demand amount, type IDs that can identify classification results based on the setting of power amount charge (charge setting type), and date group IDs that can identify a similar date indicating the final classification result, in association with each other.

(1-4) Various Process Related to Power Plan Supporting Function

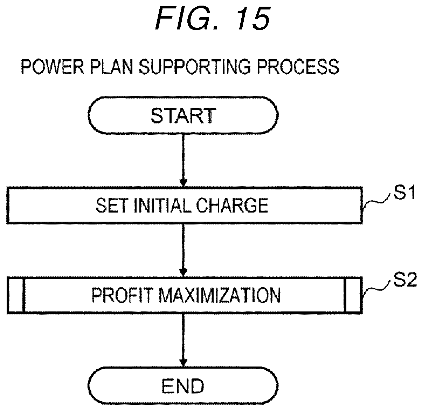

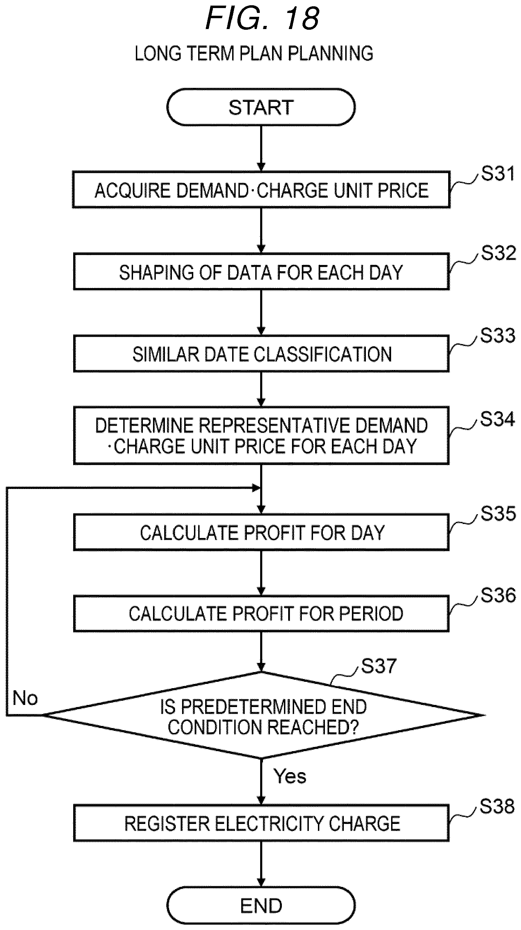

Next, how the various process is executed by the power plan supporting apparatus 1 in relation to the power plan supporting function will be described. As the process executed by the power plan supporting apparatus 1, there are mainly a series of process (power plan supporting process) related to the setting of the electricity charge and a series of process (long term plan planning process) related to the long term planning. The power plan supporting process will be described with reference to FIGS. 15 to 17, and the long term plan planning process will be described with reference to FIG. 18. It goes without saying that in the following description, while programs or modules are described as those that perform various process, in practice, the CPU 10 executes the process based on the programs or modules.

(1-4-1) Power Plan Supporting Process

FIG. 15 is a diagram illustrating an example of power plan supporting process. The power plan supporting process is executed periodically (for example, by a new charge update cycle such as a one-year cycle).
When the power plan supporting process is started, first, the initial charge setting unit 240 performs an initial charge setting for setting the initial value of the electricity charge (initial charge data) when optimizing the power amount charge (step S1). For example, the initial charge setting unit 240 determines the initial value of the electricity charge based on the electricity charge information stored in the electricity charge information table 201. Then, the initial charge setting unit 240 activates the charge optimization unit 220. As the initial value of the electricity charge, the electricity charge of the previous year may be used, for example.
The charge optimization unit 220 performs profit maximization process that maximizes a value (profit) obtained by subtracting the procurement cost related to power procurement from the income related to electric sale (step S2) . For example, the charge optimization unit 220 acquires the initial charge determined by the initial charge setting unit 240, estimates the demand (demand variation) after changing the electricity charge based on the estimated changed electricity charge, plans a procurement plan for the estimated demand and repeats a series of process to calculate profit, to thus determine the electricity charge at which profit is maximized.

(1-4-2) Profit Maximization Process

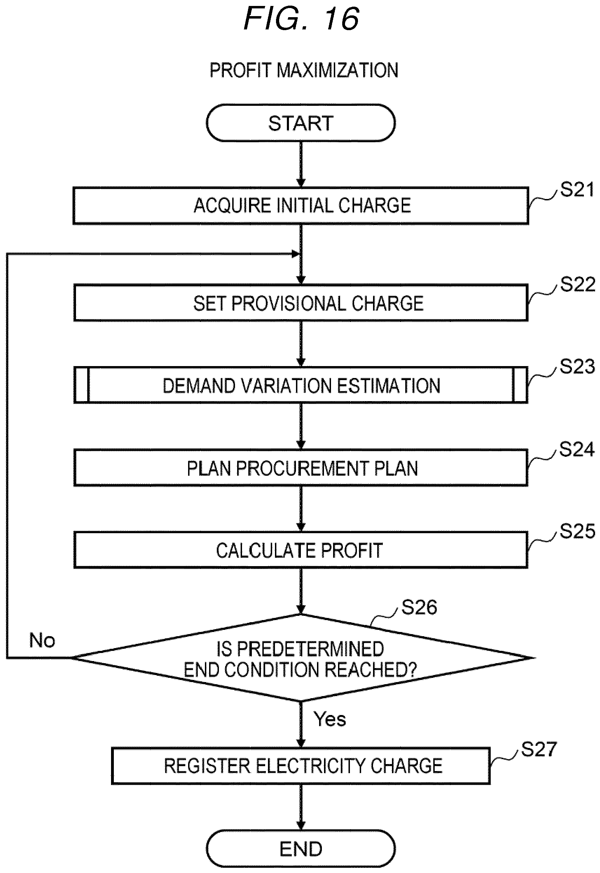

FIG. 16 is a diagram illustrating an example of profit maximization process executed in the charge optimization unit 220 in step S2 of FIG. 5.
In the profit maximization process, the provisional charge setting unit 2201 first acquires the initial charge (step S21).
Subsequently, the provisional charge setting unit 2201 sets a value different from the value of the initial charge as a provisional charge (provisional charge data) (step S22). Regarding the provisional charge setting, it may be set randomly, or process such as setting of a value having a predetermined difference close to the initial charge value may be performed. After step S26 described below, a new provisional charge may be set based on the calculation result of the profits obtained at the time of setting the provisional charge at the previous time or before. Then, the provisional charge setting unit 2201 invokes the demand variation estimation unit 2202.
The demand variation estimation unit 2202 performs a demand variation estimation process of estimating a demand variation according to a change in the electricity charge (step S23). The demand variation estimation unit 2202 estimates a changed demand variation in the electricity charge based on the set initial charge, the provisional charge, and the demand prediction information table 203, for example. For example, for the estimation of demand variation, the demand variation estimation unit 2202 estimates a demand variation by modeling a phenomenon of changing number of consumers as a result of the consumers signing up a subscription or discontinuing the subscription due to a change in the charge unit price, and a phenomenon of decreasing or increasing usage amount of the consumers due to the increase or decrease of the total payment amount.

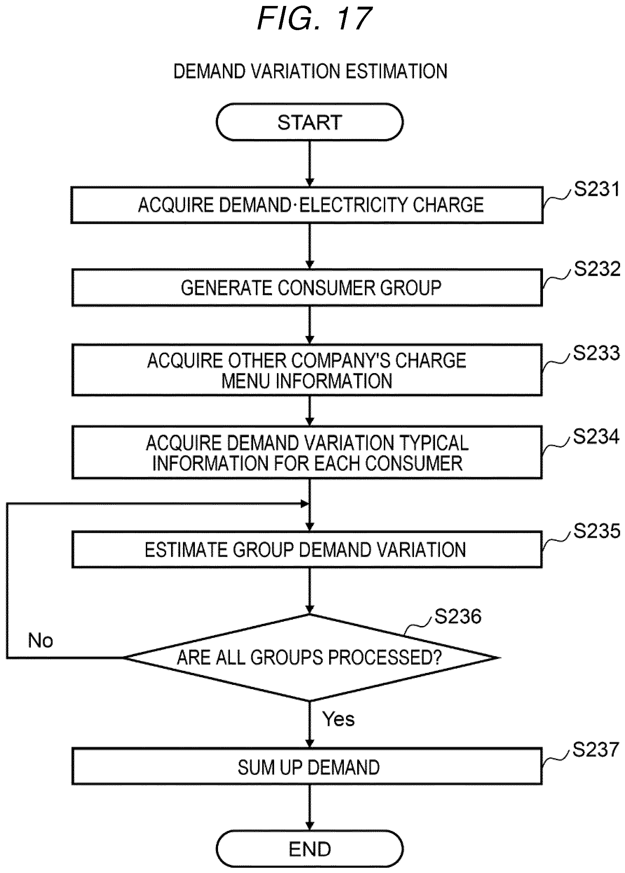

FIG. 17 is a diagram illustrating an example of the demand variation estimation process executed by the demand variation estimation unit 2202 in step S23 of FIG. 16.
For the demand variation estimation process, the demand variation estimating unit 2202 first reads the annual demand prediction time series data for each consumer and the annual electricity charge data of a company from the electricity charge information table 201 (FIG. 3), the consumer information table 202 (FIG. 4), and the demand prediction information table 203 (FIG. 5) (step S231).
Next, the demand variation estimation unit 2202 classifies the consumers based on the read demand prediction time series data and the electricity charge data, and generates a consumer group (step S232).
As a method of classifying the consumers, for example, there is a method of classifying the consumers based on the similarity of the demand prediction time series data and the identity and/or similarity of the electricity charge data.
First, the demand variation estimation unit 2202 executes clustering execution process for classifying the frequency-converted demand prediction time series data of each day into a plurality of clusters by using the clustering method such as the k-means method, the vector quantization method, the support vector machine, and the like, based on the characteristic amount of the demand prediction time series data.

Here, the demand variation estimation unit 2202 sequentially numbers the clusters as 2, 3, 4, and so on and performs classification, and simultaneously evaluates the similarity between the clusters and the separability between the clusters to determine the optimum number of clusters.

Regarding the similarity between the clusters, the demand variation estimation unit 2202 evaluates the result of clustering of each of the clusters 1 to M based on the feature quantity of the time series position data of the consumer (target user) of each day, and the distance between the cluster centroids of the clusters, for example. A method of using the feature quantity of the time series position data of the target user of each day and the distance between the cluster centroids of the respective clusters performs evaluation by using a feature quantity of each time series position data of each day in the cluster, distance between the cluster centroids of the clusters, dispersion of each time series position data of each day in the cluster, number of clusters, and the like, for example.

As such a method, there is a method of evaluating using Akaike's Information Criterion (AIC), for example. The AIC is generally expressed by the following equation, where L is the maximum likelihood and K is the number of degrees of freedom parameters.

$$AIC = -2 \ln L + 2K$$

$$\dots \quad (1)$$

The maximum likelihood L is expressed by the following equation, for example.

$$L = -\sum_{k=1}^{M} \frac{RSS_k}{2\sigma}$$

$$\dots \quad (2)$$

In Equation (2), $RSS_k$ represents the sum of squares of distances from the cluster centroid of all members of cluster k (here, the time series position data of the target user of each day), and σ represents the variance of members.

The number K of degrees of freedom parameter may be expressed by the following equation.

$$K = M \times D$$

$$\dots \quad (3)$$

In Equation (3), M represents the number of clusters, and D represents the dimension number of the feature quantity.

Meanwhile, the evaluation criterion (for example, Bayesian Information Criterion (BIC)) may also be used instead of the Akaike Information Criterion.

Regarding the separability between clusters, the demand variation estimation unit 2202 performs evaluation using the distance between the clusters, for example. Regarding the distance between clusters, for example, the demand variation estimation unit 2202 calculates boundary surfaces separable between the clusters, respectively, with a multi-class support vector machine and then calculates the inter-cluster average degree of separation B(N) by the following Equation with the total value of the margins (distances) between the clusters as $M_N$.

$$B(N) = M_N / {}_N C_2$$

$$\dots \quad (4)$$

In Equation (4), N represents the number of clusters.

The inter-cluster average degree of separation B(N) is an index representing the degree of separation between clusters as described above, and the larger the value, the more clusters are separated from each other. The inter-cluster average separation degree may be any index as long as it increases as the average distance between the clusters increases, and may be represented to apply the average value of each distance between the set of cluster centroids {Ck}.

As such, when the demand variation estimation unit 2202 finishes performing the clustering execution process of the demand prediction time series data, the consumer clustering result obtained here is stored in the column of "Clustering Result Based on Demand Amount" in the consumer classification information table 205 (FIG. 7).

The demand variation estimation unit 2202 performs classification process of the consumers based on the features of the power amount charge. More specifically, the demand variation estimation unit 2202 specifies a charge ID in each time stamp for each consumer based on the electricity charge information table 201 (FIG. 3) and the consumer information table 202 (FIG. 4). Regarding the charge ID for each specified time stamp, the demand variation estimation unit 2202 stores the charge ID in the power amount charge table 204 (FIG. 6) in the described manner, for example. The demand variation estimation unit 2202 classifies the consumers based on the time series data of the charge ID (electricity charge data) for each specified time stamp. For example, the demand variation estimation unit 2202 classifies the consumers into the same group, when the consumers have the same charge ID for each time stamp, or have at least a certain number of same (similar) charge IDs.

The demand variation estimation unit 2202 stores the classification result of the consumers obtained as such, in the column of "Classification Result Based on The Power Amount Charge" in the consumer classification information table 205 (FIG. 7).

As described above, the demand variation estimation unit 2202 performs classification according to the similarity of the demand prediction time series data and the identity and/or similarity of the electricity charge data, and then finally classifies the consumer with the same cluster ID as the "Clustering Result Based On Demand Amount" and the same classification ID as the "Classification Result Based On Power Amount Charge" of the consumer classification information table 205 (FIG. 7) into the same group. Regarding the final classification result, the demand variation estimation unit 2202 stores the final classification result in the column of "Final Classification Result" in the consumer classification information table 205 (FIG. 7).

In the demand variation estimation process, the demand variation estimation unit 2202 acquires the other company's charge menu information from the other company's charge menu information table 206 (FIG. 8) (step S233). The demand variation estimation unit 2202 acquires the demand variation typical information for each consumer from the demand variation typical information table 207 (FIG. 9) (step S234).

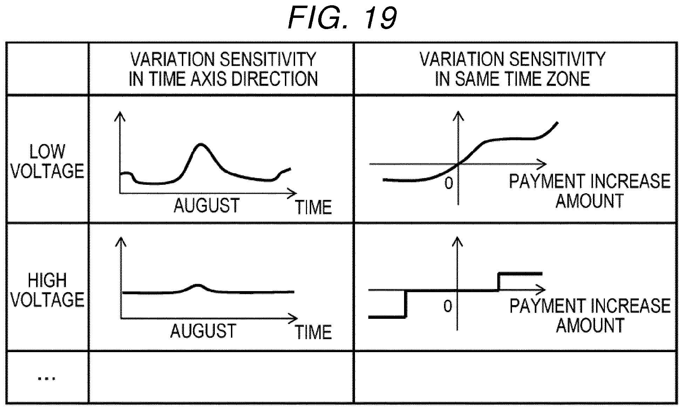

Here, the demand variation typical information for each consumer represents the sensitivity along a time axis direction of the demand variation and the sensitivity along a same time zone direction according to a change in the electricity charge. FIG. 19 illustrates a corresponding conceptual diagram. For example, regarding the variation sensitivity along the time axis direction, the user sets a summer period and a winter period high, which are seasons considered to be likely to be affected by the price change. Regarding the variation sensitivity in the same time zone, the user sets according to consumer types, such as low voltage consumers, high voltage consumers, and the like. Here, for example, when the user is a low voltage consumer, since there would be many contract parameters, it may be set so that the demand variation occurs smoothly according to the payment increase amount (payment decrement amount in the negative direction). When the user is a high voltage consumer, it may be set so that an increase in payment increase amount does not immediately appear, but demand variation occurs when a specified threshold is exceeded. The demand variation estimation unit 2202 may calculate the total payment amount at the other company's charge based on the other company's charge menu information and the information on the sum of the demand amounts of the consumers belonging to the consumer group, for example, and set a sensitivity of a demand variation according to a change in the electricity charge for each consumer group based on the difference between the calculated total payment amount of the other company's charge and the total payment amount with the current charge unit price.

Next, in the demand variation estimation process, the demand variation estimation unit 2202 estimates a demand variation for each classified consumer group (step S235). First, the demand variation estimation unit 2202 specifies the contract type of the consumer belonging to the classified consumer group from the consumer information table 202, and determines the contract type to which the greatest number of consumers in the group belongs to as the contract type of the corresponding consumer group.

When the current meter unit price of the consumer group g at time t is $R_{g, t, 0}$, the sum of the demand estimation values of consumers belonging to the consumer group at time t in the future is $D_{g, t, 0}$, the unit price of the current basic charge for consumer group g is $basis\_R_{g, 0}$, and the maximum value of the sum of the demand estimation values of the consumers belonging to the consumer group is $D_{g, max, 0}$, the total payment amount $P_{g, 0}$ at the current unit price of the consumer group g is expressed by the following equation, for example.

$$P_{g,0} = \sum_{t} \{R_{g,t,0} \times D_{g,t,0}\} + basis\_R_{g,0} \times D_{g,max,0}$$

... (5)

Here, when the unit price of the meter charge and the unit price of the basic charge are changed to $R_{g, t, 1}$ and $basis\_R_{g, 1}$, the increment amount $CH_g$ (decrement amount in the negative) of the total payment amount of the consumer group g is calculated by Equation (6).

$$CH_g = \left( \sum_t (R_{g,t,1} \times D_{g,t,0}) - \sum_t (R_{g,t,0} \times D_{g,t,0}) \right) + (basis\_R_{g,1} \times D_{g,max,0} - basis\_R_{g,0} \times D_{g,max,0})$$

$$\dots \quad (6)$$

When it is assumed that the demand is decreased (increased) by the increment (decrement) of the total payment amount, when the demand decrement amount at time t regarding the increment amount $CH_g$ is $F_{g,t}$, the changed demand amount $D_{g,t,1}$ at time t in the charge unit price is expressed by Equation (7), for example.

$$D_{g,t,1} = D_{g,t,0} - F_{g,t}$$

$$\dots \quad (7)$$

The demand decrement amount $F_{g,t}$ at the time t is determined based on the increment amount $CH_g$ of the total payment amount and demand variation typical information for each consumer acquired in step S234, for example. When the variation sensitivity of consumer group g at time t in the time axis direction is Sens1(g, t), and the variation sensitivity regarding payment increase amount C in the same time zone is Sens2(g, c), the demand decrement amount $F_{g,t}$ is expressed by the following Equation, for example.

$$F_{g,t} = a \times CH_g \times Sens1(g, t) \times Sens2(g, CH_g)$$

$$\dots \quad (8)$$

Here, a is a constant.

Next, in the group demand variation estimation process, the demand variation estimation unit 2202 checks whether all the groups are processed in step S232 (step S236). When it is determined that not all of the groups are processed, the demand variation estimation unit 2202 sets an unprocessed consumer group as a process target and performs the group demand variation estimation process (step S235). On the other hand, when it is determined that all the groups is processed, the demand variation estimation unit 2202 performs a demand sum process (step S237).

Subsequently, the demand variation estimation unit 2202 adds the changed demand in the electricity charge of all the groups for each time t, and calculates the changed total demand in the electricity charge (step S237). Then, when the series of process is completed, the demand variation estimation unit 2202 invokes the procurement planning unit 2203.

Subsequently, the procurement planning unit 2203 plans a procurement plan based on the estimated result of the changed total demand in the electricity charge estimated by the demand variation estimation unit 2202 (step S24). The procurement planning unit 2203 plans a power procurement plan that can supply the power for the changed total demand in the electricity charge. For example, when the company owns its own power generation facilities, the power generation cost per unit power generation amount is set by setting in advance the cost for each output of each of the owned generators, or by defining a formula with fuel unit price as a coefficient. For example, restrictions on the output, cost, and operation of the generator are managed in the form illustrated in the generator information table 208 (FIG. 10).

Procurement from the power market may be regarded as one supply source. In that case, for example, the cost per unit procurement amount is set based on the estimation value of the future market price. The estimation value of the future market price is stored in the form illustrated in the market condition prediction information table 209, for example (FIG. 11).

Then, the procurement planning unit 2203 performs an optimization calculation for obtaining a combination of supply sources and an output of supply sources with which cost for power procurement is minimized. The combination of the supply sources is a combination of a generator start/stop flag of a plurality of generators (unit commitment) and a flag indicating whether to procure from the power market (for example, spot market procurement, hour-ahead market), for example. The output of the supply source is the output of each generator, and the procurement amount from the power market, for example. In the optimization calculation, the procurement planning unit 2203 searches for a solution within a range that satisfies constraints according to operation, such as minimum output, maximum output, lamp output, and the like of the generator. For the cost related to the operation of the generator, for example, the cost of operation for each per unit time is calculated using the coefficients (a, b, c) of the cost function acquired from the generator information table 208, by the following equation.

$$FuelCost = a + bP + cP^2$$

$$\dots \quad (9)$$

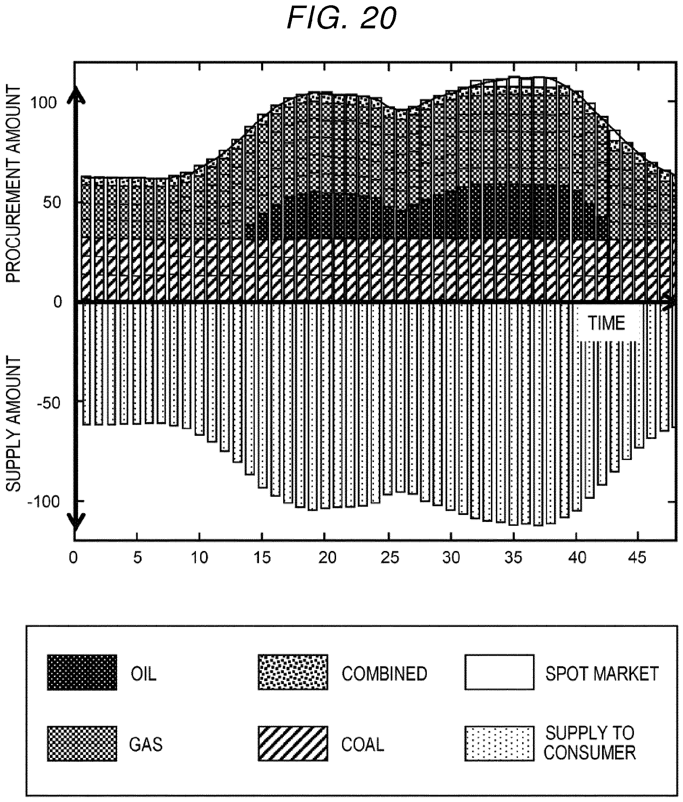

FIG. 20 illustrates an example of a result of performing an optimization calculation for obtaining a combination of supply sources and an output with which the cost for power procurement is minimized. The horizontal axis in FIG. 20 represents the delivery time, and in the example, the results of 48 frames are illustrated at 30-minute interval starting from 0 o'clock. The vertical axis represents the procurement amount in the positive direction and the supply amount in the negative direction, and the procurement amount and the supply amount are equal to each other at each time. Regarding the procurement amount in the positive direction, each block represents the output of each supply source, and is color-coded for each type of supply source (in the example, a petroleum machine, a combined machine, a gas generator, a coal generator, spot market purchases). Then, when the series of process is completed, the procurement planning unit 2203 invokes the profit calculation unit 2204.

Subsequently, the profit calculation unit 2204 calculates the profit based on the estimated result of the changed total demand in the electricity charge and the result of the procurement plan at the demand variation estimation unit 2202 and the procurement planning unit 2203 (step S25) . In the calculation of the profit, the profit calculation unit 2204 calculates the profit by calculating income based on the changed total demand in the electricity charge and the provisional charge set in step S22, and subtracting the cost of procurement therefrom. When the cost of procurement of the supply source u at time t is Cost(u, t), the profit R is expressed by the following equation, for example.

$$R = \sum_{g} \left[ \sum_{t} \{R_{g,t,1} \times D_{g,t,1}\} + basis\_R_{g,1} \times (D_{g,max,0} - F_{g,t}) \right] - \sum_{u} \sum_{t} Cost(u,t)$$

$$\dots \quad (10)$$

Then, when the series of process is completed, the profit calculation unit 2204 invokes the optimum solution searching unit 2205.

Subsequently, the optimum solution searching unit 2205 determines whether or not the predetermined end condition is reached (for example, whether or not profits are calculated for a predetermined number of times) (step S26). When it is determined that the predetermined condition is reached, the optimum solution searching unit 2205 registers the provisional charge with the highest profit from the iteration of the series of process from the step S22 to the step S25 in the optimization result storage table 210 as the optimum electricity charge (step S27).

On the other hand, when it is determined that the predetermined end condition is not reached, the optimum solution searching unit 2205 invokes the provisional charge setting process (step S22). When the provisional charge setting process (step S22) is invoked again, a new provisional charge may be set using a general optimization method (Simulated Annealing, genetic algorithm, taboo search, and the like), for example. The profit maximization process may be terminated based on the end condition of these optimization methods. In other words, the optimum solution searching unit 2205 may determine whether to terminate the profit maximization process based on the result of the profit calculation.

(1-4-3) Long Term Plan Planning Process

FIG. 18 is a diagram illustrating an example of a long term plan planning process executed in the long term plan planning unit 230. The long term plan planning process is executed periodically (for example, by a new charge update cycle such as a one-year cycle).

In the long term plan planning process, first, the similar date classification unit 2301 acquires the demand prediction time series data from the demand prediction information table 203, acquires charge unit price data (electricity charge data) for each time from the power amount charge table 204, and acquires contract type data for each consumer from the consumer information table 202 (step S31).

Subsequently, the similar date classification unit 2301 performs a shaping process to divide the acquired demand prediction time series data and the charge unit price data for each time into data for each day (for example, 48 frames) (step S32).

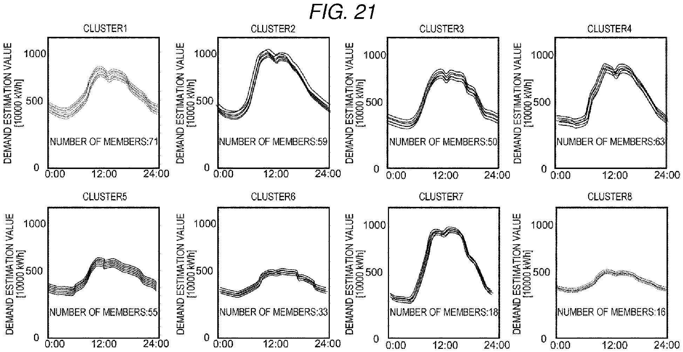

Subsequently, the similar date classification unit 2301 classifies each day based on the similarity of the total demand of all consumers (total demand prediction time series data) divided for each day and the identity and/or similarity of features of charge unit price data for each day (step S33) . In the classification, first, the similar date classification unit 2301 classifies the total demand prediction time series data based on the demand pattern by the clustering method illustrated in step S232, for example. FIG. 21 illustrates an example in which total demand prediction time series data of each day are classified by clustering.

Subsequently, the similar date classification unit 2301 further classifies each day classified by the demand pattern, based on the charge unit price data for each day (combination of unit prices of meter charge for each day). FIG. 13 illustrates an example of a combination of unit prices of meter charges on a certain day, which is generated for all days (365 days in the case of year) based on the electricity charge information table 201. The similar date classification unit 2301 compares each day for a combination of unit prices of the meter charge of each day and classifies the days with the same combinations or the combinations differed by a predetermined value or less into the same charge setting type.

As illustrated in FIG. 14, the similar date classification unit 2301 finally determines the days having the same combination of the cluster ID which is the classification result of the demand pattern and the type ID which is the classification result of the charge setting type, to be the same day group (similar date). Then, when the series of process is completed, the similar date classification unit 2301 invokes the representative case determination unit 2302.

The representative case determination unit 2302 determines a demand estimation value and a charge setting type of a representative case of the day group in which profit optimization is performed, based on the classification result in step S33 (step S34) . For the generation of the representative case of each day group, the representative case determination unit 2302 uses the average value at each time of the total demand prediction time series data of each day belonging to the day group as the demand estimation value of the representative case, for example. Also, the representative case determination unit 2302 uses the most frequent charge setting type among the charge setting types of each day belonging to the day group as the charge setting type of the representative case, for example. Then, when the series of process is completed, the representative case determination unit 2302 invokes the period evaluation value estimation unit 2303.

The period evaluation value estimation unit 2303 calculates the daily profits for each representative case using the demand estimation value of each representative case and the charge setting type determined in step S34 (step S35) . The daily profit calculation process is the same as the series of process of steps S22 to S25 in FIG. 16. At the time, constraints are set so that the electricity charges after optimization in each representative case (R1 to R26 in FIG. 3) are the same in each representative case.

Next, the period evaluation value estimation unit 2303 calculates profits in all the periods by integrating the profit calculation results of the respective representative cases (step S36) . In the calculation of the profit for all the periods, the period evaluation value estimation unit 2303 determines the estimation profit for all the periods by calculating a total sum by multiplying the profit of each representative case by the number of days belonging to the representative case, for example. Then, when the series of process is completed, the period evaluation value estimation unit 2303 invokes the period evaluation value optimum solution searching unit 2304.

Subsequently, the period evaluation value optimum solution searching unit 2304 determines whether or not the predetermined end condition is reached (for example, whether or not profits are calculated for a predetermined number of times) (step S37) . When it is determined that the predetermined condition is reached, the period evaluation value optimum solution searching unit 2304 registers the provisional charge with the highest profit from the iteration of the series of process of the steps S35 and S36 into the optimization result storage table 210 as the electricity charge (step S38) . On the other hand, when it is determined that the predetermined end condition is not reached, the period evaluation value optimum solution searching unit 2304 invokes the daily profit calculation process (step S35). When the daily profit calculation process (step S22) is invoked again, a new provisional charge may be set using a general optimization method (Simulated Annealing, genetic algorithm, taboo search, and the like), for example. The profit maximization process may be terminated based on the end condition of these optimization methods. In other words, the period evaluation value optimum solution searching unit 2304 may determine whether to terminate the long term plan planning process based on the calculation result of the period profits.

In the long term plan planning unit 230, the long term plan planning process may be used as a method of determining an initial solution to be used for performing normal optimization without performing time division. In other words, the electricity charge at which the maximum profit is calculated by the power plan supporting apparatus 1 is used as an initial value of a parameter in the optimization process by the computer that executes the optimization process for optimizing the profits of all the periods without performing time division. As such, the electricity charge at which the maximum profit is calculated by the power plan supporting apparatus 1 is used as the initial value, so that the time required for the optimization process in the computer may be shortened.

In the embodiment described above, the period of division is set to be daily, but it goes without saying that it may be similarly executed in another arbitrary period unit such as weekly or monthly.

(1-5) Effects of the Present Embodiment

As described above, according to the present embodiment, the power plan supporting apparatus collects the electricity charge data including the time series charge unit price and the time series demand prediction time series data of the consumer who consumes power, estimates the demand variation according to the change in the electricity charge based on the collected electricity charge data and demand prediction time series data, classifies similar dates in the profit optimization plan that extracts the electricity charge at which the prediction value of profit is maximized, by simultaneously considering income by electric sales and procurement cost, determines the representative case based on the classification result of the similar date, and performs the optimization calculation for the representative case, and integrates the optimization results, thereby optimizing the long term plan.

Therefore, reduction of the calculation resources necessary for optimization may be realized, by specifying the period data in which the input to the optimization unit is the same from the time series data such as a given power demand, optimizing the representative case based on the specified period data, and integrating the results.

(1-6) Characteristic Configuration of the Present Embodiment

(1-6-1) First Characteristic Configuration

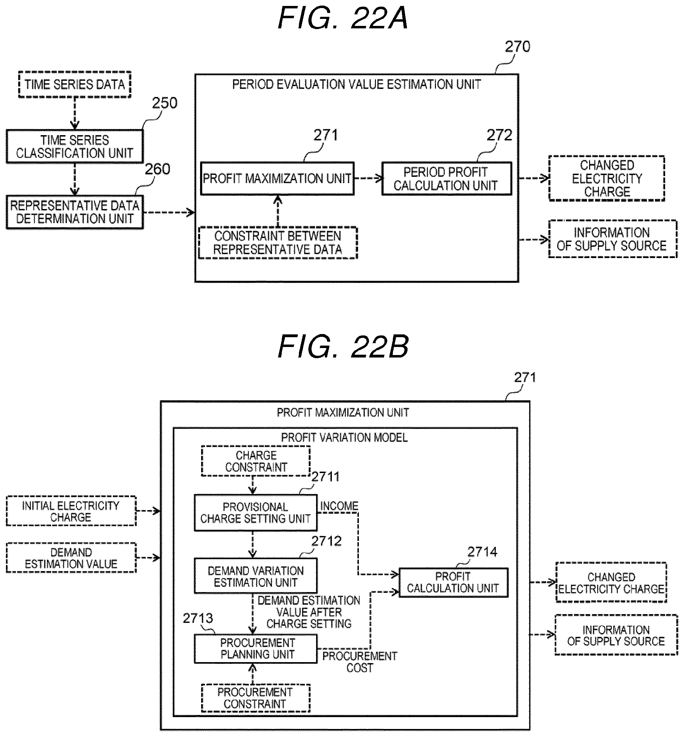

FIG. 22A is a diagram illustrating an example of a characteristic configuration of the power plan supporting apparatus 1.

As illustrated in FIG. 22A, the power plan supporting apparatus 1 includes a time series classification unit 250 that classifies the time series data (for example, demand prediction time series data, electricity charge data) into groups of periods (for example, similar date) in which input conditions are the same or similar in power plan optimization (for example, electricity charge), a representative data determination unit 260 that determines representative data (for example, demand estimation value of a representative case and a charge setting type) for each group classified by the time series classification unit 250, a period evaluation value estimation unit 270 that integrates the evaluation values (for example, daily profits) for each representative data determined by the representative data determination unit 260 to calculate the evaluation values (for example, period profits) for all the periods.

The time series classification unit 350 classifies the time series data based on features of data distribution and/or attributes of data. More specifically, the time series data includes demand time series data (for example, demand prediction time series data) illustrating the power demand at each time divided at regular intervals and charge unit price data (for example, electricity charge data) indicating a unit price of electricity charge at each of the times divided at regular intervals. The time series classification unit 250 classifies the time series data based on the similarity of the demand time series data and the identity and/or similarity of the charge unit price data. More specifically, the time series classification unit 250 classifies the demand time series data by performing clustering execution process for classifying the demand time series data into a plurality of clusters based on features of frequency data obtained by frequency conversion of the demand time series data. The time series classification unit 250 classifies the charge unit price data based on the identity and/or similarity of combinations of types of unit prices of the meter charge of each consumer in each period.

The representative data determination unit 260 determines the representative demand estimation value (for example, demand estimation value of the representative case) indicating the demand of representative data of each group by using the average value of demand time series data of all consumers belonging to each group classified for each period by the time series classification unit 250. The representative data determination unit 260 determines that, among the combinations of the types of unit price of meter charge in each period of charge unit price data belonging to each group classified by the time series classification unit 250, the most frequent combination is the charge setting type in each period of the representative data of each group.

The period evaluation value estimation unit 270 calculates the evaluation value of all the periods based on the charge income by electric sales and cost for power procurement.

The period evaluation value estimation unit 270 includes a profit maximization unit 271 that optimizes and determines the electricity charge at which the profit (for example, daily profit) is maximized. The profit maximization unit 271 estimates a variation in demand according to a change in the electricity charge based on the demand time series data and the charge unit price data, and outputs information on electricity charge and power supply source (for example, a combination of supply sources and an output of supply sources) at which profit is maximized, for evaluation value in each period, based on income by electric sales and cost for power procurement. Other features of the profit maximization unit 271 will be described with reference to FIG. 22B.

The period evaluation value estimation unit 270 includes a period profit calculation unit 272 that calculates period profits. The period profit calculation unit 272 calculates, by the profit maximization unit 271, the evaluation value of all the periods by calculating a total sum, by multiplying the evaluation value of each representative data, which is calculated based on the representative demand estimation value of the representative data of each group classified by the time series classification unit 250 and based on the charge setting type, by the number of time series data belonging to each representative data.

According to the above configuration, for example, optimization is performed on representative data in a period in which optimization input conditions are the same or similar, and the evaluation values of the representative data are integrated to obtain the evaluation value of all the periods, and accordingly, it is possible to omit overlapping calculation process for the period in which the input conditions are the same or similar, thereby reducing calculation resources used for optimization.

(1-6-2) Second Characteristic Configuration

FIG. 22B is a diagram illustrating an example of the characteristic configuration of the power plan supporting apparatus 1.

Generally, profit is calculated by subtracting the cost for power procurement from income by electric sales, but when profit is maximized, the profit is calculated by maximizing the income and then minimizing the cost. However, for example, there is a possibility that the profit may not be improved (maximized) due to the influence of the cost for power procurement on demand after the increase or decrease of clients (consumers). Therefore, in the second characteristic configuration, the electricity charges at which the income is maximized is determined by considering the demand variation (income variation) according to the change in the electricity charge and the change in the procurement plan (cost variation) according to the demand variation at the same time.

As illustrated in FIG. 22B, the power plan supporting apparatus 1 includes the profit maximization unit 271. The profit maximization unit 271 includes a provisional charge setting unit 2711 that sets a provisional charge estimating the changed electricity charge, a demand variation estimation unit 2712 that calculates the demand amount at each time based on the provisional charge set by the provisional charge setting unit 2711, a procurement planning unit 2713 that plans a procurement plan for when the power of the demand amount estimated by the demand variation estimation unit 2712 is supplied, and a profit calculation unit 2714 that calculates profit (for example, annual profit, daily profit) based on the provisional charge set by the provisional charge setting unit 2711, the demand amount estimated by the demand variation estimation unit 2712, and the procurement plan planed by the procurement planning unit 2713. The profit maximization unit 271 is capable of outputting the information on the electricity charge and the power supply source at which the profit calculated by the profit calculation unit 2714 is maximized.

The demand variation estimation unit 2712 classifies the consumers based on the time series data and generates a consumer group. More specifically, the demand variation estimation unit 2712 classifies the consumers based on the feature quantities of the demand time series data of each consumer, classifies the consumers based on a combination of types of unit prices of meter charges in each time zone of electricity charge data of each consumer, and generates a consumer group including the same group of consumers with the same classifications based on the demand time series data and based on the electricity charge data.

The demand variation estimation unit 2712 calculates a demand amount based on sensitivity of demand variation according to change in the electricity charge for each consumer group along a time axis direction and/or sensitivity thereof along a same time zone direction (for example, demand variation typical information). The demand variation estimation unit 2712 calculates the total payment amount at the other company's charge based on the other company's charge menu information and the information on the sum of the demand amounts of the consumers belonging to the consumer group, and sets a sensitivity of a demand variation according to a change in the electricity charge for each consumer group based on the difference between the calculated total payment amount of the other company's charge and the total payment amount at the unit price of the current electrical charge.

The demand variation estimation unit 2712 calculates a difference in the changed total payment amount in the electricity charge based on the unit price of the current meter charge at each time of the consumer group, the sum of the demand amounts of the consumers belonging to the consumer group of the future time, the unit price of the current basic charge of the consumer group, and the changed unit price of the meter charge in the electricity charge at each time of the consumer group, and calculates the changed demand amount in the electricity charge based on the difference in the calculated total payment amount.

The demand variation estimation unit 2712 calculates the changed demand amount in the electricity charge based on the difference between the changed total payment amount in the electricity charge and the sensitivity of the demand variation.

The profit maximization unit 271 determines that the provisional charge at which the profit is most maximized is the optimum electricity charge, after iterating a series of process including estimating the changed demand amount in the electricity charge based on the provisional charge set by the provisional charge setting unit 2711, determining the combination of supply sources at which the cost for power procurement is minimized regarding the estimated demand amount, and calculating the changed profit in the electricity charge from the information on the charge income by the electric sale and the cost for the power procurement calculated based on the demand amount and the provisional charge.

According to the configuration described above, it is possible to increase the profit by simultaneously considering increases and decreases in income and increases and decreases in costs.

According to the configuration described above, it is possible to realize a highly reliable power plan supporting apparatus.

(2) Other Embodiments

In the embodiment described above, while it is exemplified that the present invention is applied to the power plan supporting apparatus 1, the present invention is not limited thereto, but can be widely applied to a variety of other apparatuses, systems, and methods.

In the embodiment described above, while it is exemplified that the power plan supporting process is executed periodically, the present invention is not limited thereto, and accordingly, the power plan supporting process may be performed at predetermined timing (for example, at timing designated by the user).

In the embodiment described above, while it is exemplified that the long term plan planning process is executed periodically, the present invention is not limited thereto, and accordingly, the long term plan planning process may be performed at predetermined timing (for example, at timing designated by the user).

In the embodiment described above, while it is exemplified that the electricity charge includes the basic charge and the power amount charge, the present invention is not limited thereto, and accordingly, the electricity charge may include the basic charge, or the electricity charge may include the power amount charge, or a combination of basic charge, power amount charge, and a combination of basic charge and power amount charge may be mixed in the electricity charge.

In the embodiment described above, while it is exemplified that the other company's charge menu information table 206 stores the data of the same items as the electricity charge information table 201, the present invention is not limited thereto and accordingly, the other company charge menu information table 206 may include data of different items and data of different consumer types from the electricity charge information table 201, and the like.

In the embodiment described above, while the combination of charge IDs per hour is described regarding the charge unit price storage table 211, the present invention is not limited thereto and any time unit, such as, per 30 minutes, 2 hours and the like may be adopted.

In the embodiment described above, while various kinds of data are described by using the XX table for convenience of explanation, the data structure is not limited thereto and accordingly, may be expressed by using XX file, XX information, and the like.

In the embodiment described above, while it is exemplified that the power plan supporting function is realized by the power plan supporting apparatus 1, the present invention is not limited thereto, and accordingly, part of the power plan supporting function may be realized by another computer.

In the above description, information such as a program, a table, a file, and the like that realizes each function may be stored in a storage device such as a memory, a hard disk, a solid state drive (SSD), or a recording medium such as an IC card, an SD card, DVD.

The configuration described above may be changed, rearranged, combined, or omitted as appropriate without departing from the gist of the present invention.

**Claims**

1. A power plan supporting apparatus for planning a power plan based on time series data regarding the power plan, the apparatus comprising:

    a time series classification unit that classifies the time series data into a group of periods in which input conditions are same or similar to each other in an optimization of the power plan;
    a representative data determination unit that determines representative data for each group classified by the time series classification unit; and
    a period evaluation value estimation unit that calculates an evaluation value of all the periods by integrating the evaluation value for each representative data determined by the representative data determination unit.

2. The power plan supporting apparatus according to claim 1, wherein
the period evaluation value estimation unit calculates the evaluation value of all the periods based on charge income by electric sales and cost for power procurement.

3. The power plan supporting apparatus according to claim 1, wherein
the time series classification unit classifies the time series data based on features of data distribution and/or attributes of data.

4. The power plan supporting apparatus according to claim 3, wherein
the time series data includes demand time series data indicating power demand at each time divided at regular intervals and charge unit price data indicating unit price of electricity charge at each time divided at regular intervals, and
the time series classification unit classifies the time series data based on similarity of the demand time series data and identity and/or similarity of the charge unit price data.

5. The power plan supporting apparatus according to claim 1, wherein
the period evaluation value estimation unit includes a profit maximization unit that optimizes and determines an electricity charge at which profit is maximized,
the time series data includes demand time series data indicating power demand at each time divided at regular intervals and charge unit price data indicating unit price of electricity charge at each time divided at regular intervals, and
the profit maximization unit estimates a variation in demand according to a change in the electricity charge based on the demand time series data and the charge unit price data and outputs information on electricity charge and power supply source at which profit is maximized, for evaluation value in each period, based on income by electric sales and cost for power procurement.

6. The power plan supporting apparatus according to claim 4, wherein
the time series classification unit classifies the demand time series data by performing clustering execution process for classifying the demand time series data into a plurality of clusters based on features of frequency data obtained by frequency conversion of the demand time series data.

7. The power plan supporting apparatus according to claim 6, wherein
the representative data determination unit determines a representative demand estimation value indicating the demand of representative data of each group by using an average value of the demand time series data of all consumers belonging to each group classified for each period by the time series classification unit.

8. The power plan supporting apparatus according to claim 7, wherein
the time series classification unit classifies the charge unit price data based on the identity and/or the similarity of combinations of types of unit prices of a meter charge of each consumer in each period.

9. The power plan supporting apparatus according to claim 8, wherein
the representative data determination unit determines that, among the combinations of the types of unit price of meter charge in each period of charge unit price data belonging to each group classified by the time series classification unit, the most frequent combination is the charge setting type in each period of the representative data of each group.

10. The power plan supporting apparatus according to claim 9, wherein
the period evaluation value estimation unit calculates the evaluation value of each representative data based on the representative demand estimation value and the charge setting type of the representative data of each group classified by the time series classification unit and calculates the evaluation value of all the periods by calculating a total sum by multiplying the evaluation value of each representative data by a number of time series data belonging to each representative data.

11. The power plan supporting apparatus according to claim 10, wherein
an electricity charge at which a maximum profit is output as the evaluation value for all the periods is used as an initial value of a parameter in the optimization process in a computer that executes the optimization process for optimizing the profits over all the periods without performing time division.

12. The power plan supporting apparatus according to claim 1, wherein
the period evaluation value estimation unit includes:

a charge setting unit that sets a provisional charge estimating a changed electricity charge;
a demand variation estimation unit that calculates the demand amount at each time based on the provisional charge set by the provisional charge setting unit;
a procurement planning unit that plans a procurement plan for when the power of the demand amount estimated by the demand variation estimation unit is supplied;

a profit calculation unit that calculates profit based on the provisional charge set by the provisional charge setting unit, the demand amount estimated by the demand variation estimation unit, and the procurement plan planed by the procurement planning unit; and

an optimum solution searching unit that determines an electricity charge at which a profit calculated by the profit calculating unit is maximized.

13. The power plan supporting apparatus according to claim 12, wherein
the demand variation estimation unit classifies the consumers based on the time series data and generates a consumer group.

14. The power plan supporting apparatus according to claim 13, wherein
the demand variation estimation unit calculates a demand amount based on sensitivity of the demand variation according to change in the electricity charge for each consumer group along a time axis direction and/or sensitivity thereof along a same time zone direction.

15. The power plan supporting apparatus according to claim 13, wherein
the demand variation estimation unit calculates a total payment amount at other company's charge based on other company's charge menu information and information on a sum of demand amount of consumers belonging to the consumer group, and sets sensitivity of demand variation according to a change in the electricity charge for each consumer group based on a difference between the calculated total payment amount of the other company's charge and the total payment amount at a unit price of a current electricity charge.


**Amended claims in accordance with Rule 137(2) EPC.**

1. A power plan supporting apparatus for planning a power plan based on time series data regarding the power plan, the apparatus comprising:

   a time series classification unit that classifies the time series data, which includes power consumption amount data, into a group of periods in which input conditions are same or similar to each other in an optimization of the power plan;
   a representative data determination unit that determines representative data for each group, which includes a demand estimation value of a representative case and a charge setting type, classified by the time series classification unit; and
   a period evaluation value estimation unit that calculates an evaluation value of all the periods by integrating the evaluation value for each representative data determined by the representative data determination unit.

2. The power plan supporting apparatus according to claim 1, wherein
the period evaluation value estimation unit calculates the evaluation value of all the periods based on charge income by electric sales and cost for power procurement.

3. The power plan supporting apparatus according to claim 1, wherein
the time series classification unit classifies the time series data based on features of data distribution and/or attributes of data.

4. The power plan supporting apparatus according to claim 3, wherein
the time series data includes demand time series data indicating power demand at each time divided at regular intervals and charge unit price data indicating unit price of electricity charge at each time divided at regular intervals, and
the time series classification unit classifies the time series data based on similarity of the demand time series data and identity and/or similarity of the charge unit price data.

5. The power plan supporting apparatus according to claim 1, wherein
the period evaluation value estimation unit includes a profit maximization unit that optimizes and determines an electricity charge at which profit is maximized,
the time series data includes demand time series data indicating power demand at each time divided at regular intervals and charge unit price data indicating unit price of electricity charge at each time divided at regular intervals, and

the profit maximization unit estimates a variation in demand according to a change in the electricity charge based on the demand time series data and the charge unit price data and outputs information on electricity charge and power supply source at which profit is maximized, for evaluation value in each period, based on income by electric sales and cost for power procurement.

6. The power plan supporting apparatus according to claim 4, wherein
the time series classification unit classifies the demand time series data by performing clustering execution process for classifying the demand time series data into a plurality of clusters based on features of frequency data obtained by frequency conversion of the demand time series data.

7. The power plan supporting apparatus according to claim 6, wherein
the representative data determination unit determines a representative demand estimation value indicating the demand of representative data of each group by using an average value of the demand time series data of all consumers belonging to each group classified for each period by the time series classification unit.

8. The power plan supporting apparatus according to claim 7, wherein
the time series classification unit classifies the charge unit price data based on the identity and/or the similarity of combinations of types of unit prices of a meter charge of each consumer in each period.

9. The power plan supporting apparatus according to claim 8, wherein
the representative data determination unit determines that, among the combinations of the types of unit price of meter charge in each period of charge unit price data belonging to each group classified by the time series classification unit, the most frequent combination is the charge setting type in each period of the representative data of each group.

10. The power plan supporting apparatus according to claim 9, wherein
the period evaluation value estimation unit calculates the evaluation value of each representative data based on the representative demand estimation value and the charge setting type of the representative data of each group classified by the time series classification unit and calculates the evaluation value of all the periods by calculating a total sum by multiplying the evaluation value of each representative data by a number of time series data belonging to each representative data.

11. The power plan supporting apparatus according to claim 10, wherein
an electricity charge at which a maximum profit is output as the evaluation value for all the periods is used as an initial value of a parameter in the optimization process in a computer that executes the optimization process for optimizing the profits over all the periods without performing time division.

12. The power plan supporting apparatus according to claim 1, wherein
the period evaluation value estimation unit includes:

a charge setting unit that sets a provisional charge estimating a changed electricity charge;
a demand variation estimation unit that calculates the demand amount at each time based on the provisional charge set by the provisional charge setting unit;
a procurement planning unit that plans a procurement plan for when the power of the demand amount estimated by the demand variation estimation unit is supplied;
a profit calculation unit that calculates profit based on the provisional charge set by the provisional charge setting unit, the demand amount estimated by the demand variation estimation unit, and the procurement plan planed by the procurement planning unit; and
an optimum solution searching unit that determines an electricity charge at which a profit calculated by the profit calculating unit is maximized.

13. The power plan supporting apparatus according to claim 12, wherein
the demand variation estimation unit classifies the consumers based on the time series data and generates a consumer group.

14. The power plan supporting apparatus according to claim 13, wherein
the demand variation estimation unit calculates a demand amount based on sensitivity of the demand variation according to change in the electricity charge for each consumer group along a time axis direction and/or sensitivity thereof along a same time zone direction.

15. The power plan supporting apparatus according to claim 13, wherein
the demand variation estimation unit calculates a total payment amount at other company's charge based on other company's charge menu information and information on a sum of demand amount of consumers belonging to the consumer group, and sets sensitivity of demand variation according to a change in the electricity charge for each consumer group based on a difference between the calculated total payment amount of the other company's charge and the total payment amount at a unit price of a current electricity charge.

# FIG. 1

POWER PLAN SUPPORTING APPARATUS

CPU

INPUT/OUTPUT DEVICE

COMMUNICATION DEVICE

STORAGE DEVICE

ELECTRICITY CHARGE INFORMATION TABLE

CONSUMER INFORMATION TABLE

DEMAND PREDICTION INFORMATION TABLE

POWER AMOUNT CHARGE TABLE

CONSUMER CLASSIFICATION INFORMATION TABLE

OTHER COMPANY'S CHARGE MENU INFORMATION TABLE

DEMAND VARIATION TYPICAL INFORMATION TABLE

GENERATOR INFORMATION TABLE

MARKET CONDITION PREDICTION INFORMATION TABLE

OPTIMIZATION RESULT STORAGE TABLE

CHARGE UNIT PRICE STORAGE TABLE

SIMILAR DATE CLASSIFICATION INFORMATION TABLE

# FIG. 2

POWER PLAN SUPPORTING APPARATUS — 20

STORAGE DEVICE — 1

**CHARGE OPTIMIZATION UNIT** — 220

- PROVISIONAL PRICE SETTING UNIT — 2201
- DEMAND VARIATION ESTIMATION UNIT — 2202
- PROCUREMENT PLANNING UNIT — 2203
- PROFIT CALCULATION UNIT — 2204
- OPTIMUM SOLUTION SEARCHING UNIT — 2205

**LONG TERM PLAN PLANNING UNIT** — 230

- SIMILAR DATE CLASSIFICATION UNIT — 2301
- REPRESENTATIVE CASE DETERMINATION UNIT — 2302
- PERIOD EVALUATION VALUE ESTIMATION UNIT — 2303
- PERIOD EVALUATION VALUE OPTIMUM SOLUTION SEARCHING UNIT — 2304

INITIAL CHARGE SETTING UNIT — 240

# FIG. 3

ELECTRICITY CHARGE INFORMATION TABLE                    201

| CONSUMER TYPE | CHARGE TYPE | | | CHARGE ID | 2016 YEAR CHARGE | 2017 YEAR CHARGE |
|---|---|---|---|---|---|---|
| LOW VOLTAGE | BASIC CHARGE PER 1 kWh | | | R1 | 280.8 | 280.8 |
| | POWER AMOUNT CHARGE PER 1 kWh | | | R2 | 25.1 | 25.1 |
| HIGH VOLTAGE A | BASIC CHARGE PER 1 kWh | | | R3 | 1684.8 | 1684.8 |
| | POWER AMOUNT CHARGE PER 1 kWh | PEAK TIME | | R4 | 20.2 | 20.2 |
| | | DAY TIME | SUMMER SEASON | R5 | 19.5 | 19.5 |
| | | | OTHER SEASON | R6 | 18.1 | 18.1 |
| | | NIGHT TIME | | R7 | 12.5 | 12.5 |
| HIGH VOLTAGE B | BASIC CHARGE PER 1 kWh | | | R8 | 1684.8 | 1684.8 |
| | POWER AMOUNT CHARGE PER 1 kWh | SUMMER SEASON | | R9 | 17.2 | 17.2 |
| | | OTHER SEASON | | R10 | 16.1 | 16.1 |
| HIGH VOLTAGE C | BASIC CHARGE PER 1 kWh | | | R11 | 1684.8 | 1684.8 |
| | POWER AMOUNT CHARGE PER 1 kWh | PEAK TIME | | R12 | 20.2 | 20.2 |
| | | DAY TIME | SUMMER SEASON | R13 | 19.5 | 19.5 |
| | | | OTHER SEASON | R14 | 18.1 | 18.1 |
| | | NIGHT TIME | | R15 | 12.5 | 12.5 |
| HIGH VOLTAGE D | BASIC CHARGE PER 1 kWh | | | R16 | 1684.8 | 1684.8 |
| | POWER AMOUNT CHARGE PER 1 kWh | SUMMER SEASON | | R17 | 17.2 | 17.2 |
| | | OTHER SEASON | | R18 | 16.1 | 16.1 |
| SPECIAL HIGH VOLTAGE A | BASIC CHARGE PER 1 kWh | | | R19 | 1630.8 | 1630.8 |
| | POWER AMOUNT CHARGE PER 1 kWh | PEAK TIME | | R20 | 17.4 | 17.4 |
| | | DAY TIME | SUMMER SEASON | R21 | 16.8 | 16.8 |
| | | | OTHER SEASON | R22 | 15.7 | 15.7 |
| | | NIGHT TIME | | R23 | 12.3 | 12.3 |
| SPECIAL HIGH VOLTAGE B | BASIC CHARGE PER 1 kWh | | | R24 | 1630.8 | 1630.8 |
| | POWER AMOUNT CHARGE PER 1 kWh | SUMMER SEASON | | R25 | 15.6 | 15.6 |
| | | OTHER SEASON | | R26 | 14.6 | 14.6 |

# FIG. 4

CONSUMER INFORMATION TABLE 202

| CONSUMER ID | CONTRACT TYPE |
|---|---|
| ID=1 | LOW VOLTAGE |
| ID=2 | HIGH VOLTAGE B |
| ID=3 | LOW VOLTAGE |
| ID=4 | HIGH VOLTAGE A |
| ID=5 | SPECIAL HIGH VOLTAGE A |
| ID=6 | HIGH VOLTAGE B |
| ID=7 | LOW VOLTAGE |
| . . . | . . . |

# FIG. 5

DEMAND PREDICTION INFORMATION TABLE 203

| CONSUMER ID | ITEM | VALUE |
|---|---|---|
| ID=1 | TIME STAMP | {2017-01-01 09:00, 2017-01-01 09:30, ···} |
| | DEMAND AMOUNT [MWh] | {3417, 3374, ···} |
| ID=2 | TIME STAMP | {2017-01-01 09:00, 2017-01-01 09:30, ···} |
| | DEMAND AMOUNT [MWh] | {3566, 3432, ···} |
| ... | ... | ... |

# FIG. 6

POWER AMOUNT CHARGE TABLE                    204

| CONSUMER ID | ITEM | VALUE |
|---|---|---|
| ID=1 | TIME STAMP | {2017-01-01 09:00, 2017-01-01 09:30, ···} |
| | CHARGE ID | {R2, R2, ···} |
| ID=2 | TIME STAMP | {2017-01-01 09:00, 2017-01-01 09:30, ···} |
| | CHARGE ID | {R10, R10, ···} |
| ... | ... | ... |

# FIG. 7

CONSUMER CLASSIFICATION INFORMATION TABLE                    205

| CONSUMER ID | CLUSTERING RESULT BASED ON DEMAND AMOUNT | CLASSIFICATION RESULT BASED ON POWER AMOUNT CHARGE | FINAL CLASSIFICATION RESULT |
|---|---|---|---|
| ID=1 | CLUSTER ID=1 | CLASSIFICATION ID=1 | CONSUMER GROUP ID=1 |
| ID=2 | CLUSTER ID=1 | CLASSIFICATION ID=1 | CONSUMER GROUP ID=1 |
| ID=3 | CLUSTER ID=2 | CLASSIFICATION ID=1 | CONSUMER GROUP ID=2 |
| ID=4 | CLUSTER ID=3 | CLASSIFICATION ID=2 | CONSUMER GROUP ID=3 |
| ID=5 | CLUSTER ID=2 | CLASSIFICATION ID=2 | CONSUMER GROUP ID=4 |
| ID=6 | CLUSTER ID=1 | CLASSIFICATION ID=3 | CONSUMER GROUP ID=5 |
| ID=7 | CLUSTER ID=4 | CLASSIFICATION ID=4 | CONSUMER GROUP ID=6 |
| ID=8 | CLUSTER ID=1 | CLASSIFICATION ID=3 | CONSUMER GROUP ID=5 |
| ... | ... | ... | ... |

# FIG. 8

OTHER COMPANY'S CHARGE MENU INFORMATION TABLE  206

| CONSUMER TYPE | CHARGE TYPE | | | CHARGE ID | 2016 YEAR CHARGE | 2017 YEAR CHARGE |
|---|---|---|---|---|---|---|
| LOW VOLTAGE | BASIC CHARGE PER 1 kWh | | | R1 | 280.8 | 280.8 |
| | POWER AMOUNT CHARGE PER 1 kWh | | | R2 | 25.1 | 25.1 |
| HIGH VOLTAGE A | BASIC CHARGE PER 1 kWh | | | R3 | 1684.8 | 1684.8 |
| | POWER AMOUNT CHARGE PER 1 kWh | DAY TIME | PEAK TIME | R4 | 20.2 | 20.2 |
| | | | SUMMER SEASON | R5 | 19.5 | 19.5 |
| | | | OTHER SEASON | R6 | 18.1 | 18.1 |
| | | NIGHT TIME | | R7 | 12.5 | 12.5 |
| HIGH VOLTAGE B | BASIC CHARGE PER 1 kWh | | | R8 | 1684.8 | 1684.8 |
| | POWER AMOUNT CHARGE PER 1 kWh | SUMMER SEASON | | R9 | 17.2 | 17.2 |
| | | OTHER SEASON | | R10 | 16.1 | 16.1 |
| HIGH VOLTAGE C | BASIC CHARGE PER 1 kWh | | | R11 | 1684.8 | 1684.8 |
| | POWER AMOUNT CHARGE PER 1 kWh | DAY TIME | PEAK TIME | R12 | 20.2 | 20.2 |
| | | | SUMMER SEASON | R13 | 19.5 | 19.5 |
| | | | OTHER SEASON | R14 | 18.1 | 18.1 |
| | | NIGHT TIME | | R15 | 12.5 | 12.5 |
| HIGH VOLTAGE D | BASIC CHARGE PER 1 kWh | | | R16 | 1684.8 | 1684.8 |
| | POWER AMOUNT CHARGE PER 1 kWh | SUMMER SEASON | | R17 | 17.2 | 17.2 |
| | | OTHER SEASON | | R18 | 16.1 | 16.1 |
| SPECIAL HIGH VOLTAGE A | BASIC CHARGE PER 1 kWh | | | R19 | 1630.8 | 1630.8 |
| | POWER AMOUNT CHARGE PER 1 kWh | DAY TIME | PEAK TIME | R20 | 17.4 | 17.4 |
| | | | SUMMER SEASON | R21 | 16.8 | 16.8 |
| | | | OTHER SEASON | R22 | 15.7 | 15.7 |
| | | NIGHT TIME | | R23 | 12.3 | 12.3 |
| SPECIAL HIGH VOLTAGE B | BASIC CHARGE PER 1 kWh | | | R24 | 1630.8 | 1630.8 |
| | POWER AMOUNT CHARGE PER 1 kWh | SUMMER SEASON | | R25 | 15.6 | 15.6 |
| | | OTHER SEASON | | R26 | 14.6 | 14.6 |

# FIG. 9

DEMAND VARIATION TYPICAL INFORMATION TABLE                                   207

| | | VARIATION SENSITIVITY IN TIME AXIS DIRECTION | | VARIATION SENSITIVITY IN SAME TIME ZONE | |
|---|---|---|---|---|---|
| LOW VOLTAGE | TIME STAMP | {2018-01-01 09:00, 2018-01-01 09:30, ⋯} | PAYMENT INCREASE AMOUNT | {⋯-2000, 1000, 0, 1000, 2000, ⋯} |
| | VALUE | {10, 10, ⋯} | VALUE | {100, 100, ⋯} |
| HIGH VOLTAGE | TIME STAMP | {2017-01-01 09:00, 2017-01-01 09:30, ⋯} | PAYMENT INCREASE AMOUNT | {⋯-2000, 1000, 0, 1000, 2000, ⋯} |
| | VALUE | {100, 100, ⋯} | VALUE | {150, 50, ⋯} |
| ⋯ | | ⋯ | | ⋯ |

## FIG. 10

GENERATOR INFORMATION TABLE                    208

| GENERATOR No. | TYPE | MINIMUM OUTPUT (GW) | MAXIMUM OUTPUT (GW) | LAMP OUTPUT (GW) | COEFFICIENT a OF COST FUNCTION (M¥) | COEFFICIENT b OF COST FUNCTION (M¥/GWh) | COEFFICIENT c OF COST FUNCTION (M¥/GWh) |
|---|---|---|---|---|---|---|---|
| 1 | COAL | 3.00 | 13 | 13.5 | 6.5 | 0.5 | 0.00005 |
| 2 | COAL | 2.50 | 9 | 9 | 5.0 | 0.5 | 0.00008 |
| 3 | COAL | 2.50 | 9 | 9 | 5.0 | 0.5 | 0.00008 |
| 4 | LNG | 2.00 | 9 | 9 | 1.5 | 3.0 | 0.00003 |
| 5 | LNG | 1.80 | 9 | 9 | 1.5 | 3.0 | 0.00003 |
| 6 | LNG | 1.80 | 9 | 9 | 1.5 | 3.0 | 0.00003 |
| 7 | LNG | 1.80 | 9 | 9 | 1.5 | 3.0 | 0.00003 |
| 8 | LNG | 1.80 | 5 | 4.5 | 1.5 | 3.0 | 0.00003 |
| 9 | LNG | 1.80 | 9 | 9 | 1.5 | 3.0 | 0.00003 |
| 10 | OIL | 7.00 | 27 | 27 | 9.0 | 7.0 | 0.00001 |

EP 3 570 224 A1

# FIG. 11

MARKET CONDITION PREDICTION INFORMATION TABLE        209

| ITEM | VALUE |
|---|---|
| TIME STAMP | {2017-01-01 09:00, 2017-01-01 09:30, ⋯} |
| SPOT MARKET COST ESTIMATION VALUE [YEN/kWh] | {12, 13, ⋯} |
| HOUR-AHEAD MARKET PRICE ESTIMATION VALUE [YEN/kWh] | {13, 15, ⋯} |
| FORWARD MARKET PRICE ESTIMATION VALUE [YEN/kWh] | {9, 10, ⋯} |
| ⋯ | ⋯ |

29

# FIG. 12

OPTIMIZATION RESULT STORAGE TABLE 210

| CONSUMER TYPE | CHARGE TYPE | | | CHARGE ID | OPTIMUM CHARGE |
|---|---|---|---|---|---|
| LOW VOLTAGE | BASIC CHARGE PER 1 kWh | | | R1 | 280.8 |
| | POWER AMOUNT CHARGE PER 1 kWh | | | R2 | 25.1 |
| HIGH VOLTAGE A | BASIC CHARGE PER 1 kWh | | | R3 | 1684.8 |
| | POWER AMOUNT CHARGE PER 1 kWh | | PEAK TIME | R4 | 20.2 |
| | | DAY TIME | SUMMER SEASON | R5 | 19.5 |
| | | | OTHER SEASON | R6 | 18.1 |
| | | NIGHT TIME | | R7 | 12.5 |
| HIGH VOLTAGE B | BASIC CHARGE PER 1 kWh | | | R8 | 1684.8 |
| | POWER AMOUNT CHARGE PER 1 kWh | SUMMER SEASON | | R9 | 17.2 |
| | | OTHER SEASON | | R10 | 16.1 |
| HIGH VOLTAGE C | BASIC CHARGE PER 1 kWh | | | R11 | 1684.8 |
| | POWER AMOUNT CHARGE PER 1 kWh | | PEAK TIME | R12 | 20.2 |
| | | DAY TIME | SUMMER SEASON | R13 | 19.5 |
| | | | OTHER SEASON | R14 | 18.1 |
| | | NIGHT TIME | | R15 | 12.5 |
| HIGH VOLTAGE D | BASIC CHARGE PER 1 kWh | | | R16 | 1684.8 |
| | POWER AMOUNT CHARGE PER 1 kWh | SUMMER SEASON | | R17 | 17.2 |
| | | OTHER SEASON | | R18 | 16.1 |
| SPECIAL HIGH VOLTAGE A | BASIC CHARGE PER 1 kWh | | | R19 | 1630.8 |
| | POWER AMOUNT CHARGE PER 1 kWh | | PEAK TIME | R20 | 17.4 |
| | | DAY TIME | SUMMER SEASON | R21 | 16.8 |
| | | | OTHER SEASON | R22 | 15.7 |
| | | NIGHT TIME | | R23 | 12.3 |
| SPECIAL HIGH VOLTAGE B | BASIC CHARGE PER 1 kWh | | | R24 | 1630.8 |
| | POWER AMOUNT CHARGE PER 1 kWh | SUMMER SEASON | | R25 | 15.6 |
| | | OTHER SEASON | | R26 | 14.6 |

# FIG. 13

CHARGE UNIT PRICE STORAGE TABLE
(CHARGE UNIT PRICE FOR YEAR OF XXXX, MONTH OF O, DATE OF Δ)  211

| | LOW VOLTAGE | HIGH VOLTAGE A | HIGH VOLTAGE B | HIGH VOLTAGE C | HIGH VOLTAGE D | SPECIAL HIGH VOLTAGE A | SPECIAL HIGH VOLTAGE B |
|---|---|---|---|---|---|---|---|
| 0:00 | R2 | R7 | R10 | R15 | R18 | R23 | R26 |
| 1:00 | R2 | R7 | R10 | R15 | R18 | R23 | R26 |
| 2:00 | R2 | R7 | R10 | R15 | R18 | R23 | R26 |
| 3:00 | R2 | R7 | R10 | R15 | R18 | R23 | R26 |
| 4:00 | R2 | R7 | R10 | R15 | R18 | R23 | R26 |
| 5:00 | R2 | R7 | R10 | R15 | R18 | R23 | R26 |
| 6:00 | R2 | R7 | R10 | R15 | R18 | R23 | R26 |
| 7:00 | R2 | R6 | R10 | R14 | R18 | R22 | R26 |
| 8:00 | R2 | R6 | R10 | R14 | R18 | R22 | R26 |
| 9:00 | R2 | R6 | R10 | R14 | R18 | R22 | R26 |
| 10:00 | R2 | R6 | R10 | R14 | R18 | R22 | R26 |
| 11:00 | R2 | R6 | R10 | R14 | R18 | R22 | R26 |
| 12:00 | R2 | R6 | R10 | R14 | R18 | R22 | R26 |
| 13:00 | R2 | R6 | R10 | R14 | R18 | R22 | R26 |
| 14:00 | R2 | R6 | R10 | R14 | R18 | R22 | R26 |
| 15:00 | R2 | R6 | R10 | R14 | R18 | R22 | R26 |
| 16:00 | R2 | R6 | R10 | R14 | R18 | R22 | R26 |
| 17:00 | R2 | R6 | R10 | R14 | R18 | R22 | R26 |
| 18:00 | R2 | R6 | R10 | R14 | R18 | R22 | R26 |
| 19:00 | R2 | R7 | R10 | R15 | R18 | R23 | R26 |
| 20:00 | R2 | R7 | R10 | R15 | R18 | R23 | R26 |
| 21:00 | R2 | R7 | R10 | R15 | R18 | R23 | R26 |
| 22:00 | R2 | R7 | R10 | R15 | R18 | R23 | R26 |
| 23:00 | R2 | R7 | R10 | R15 | R18 | R23 | R26 |

# FIG. 14

SIMILAR DATE CLASSIFICATION INFORMATION TABLE

212

| DATE ID | DEMAND AMOUNT CLUSTERING RESULT | CHARGE SETTING TYPE | FINAL CLASSIFICATION RESULT |
|---------|--------------------------------|---------------------|----------------------------|
| ID=1 | CLUSTER ID=1 | TYPE ID=1 | DATE GROUP ID=1 |
| ID=2 | CLUSTER ID=1 | TYPE ID=1 | DATE GROUP ID=1 |
| ID=3 | CLUSTER ID=2 | TYPE ID=1 | DATE GROUP ID=2 |
| ID=4 | CLUSTER ID=3 | TYPE ID=2 | DATE GROUP ID=3 |
| ID=5 | CLUSTER ID=2 | TYPE ID=2 | DATE GROUP ID=4 |
| ID=6 | CLUSTER ID=1 | TYPE ID=3 | DATE GROUP ID=5 |
| ID=7 | CLUSTER ID=4 | TYPE ID=4 | DATE GROUP ID=6 |
| ID=8 | CLUSTER ID=1 | TYPE ID=3 | DATE GROUP ID=5 |
| ... | ... | ... | ... |

## FIG. 15

POWER PLAN SUPPORTING PROCESS

START

SET INITIAL CHARGE — S1

PROFIT MAXIMIZATION — S2

END

# FIG. 16

PROFIT MAXIMIZATION

```
        ┌─────────────┐
        │    START    │
        └─────────────┘
               │
               ▼
   ┌──────────────────────────────┐
   │     ACQUIRE INITIAL CHARGE    │ ⟋S21
   └──────────────────────────────┘
               │
               ▼
   ┌──────────────────────────────┐
   │     SET PROVISIONAL CHARGE    │ ⟋S22
   └──────────────────────────────┘
               │
               ▼
   ┌──────────────────────────────┐
   │   DEMAND VARIATION ESTIMATION │ ⟋S23
   └──────────────────────────────┘
               │
               ▼
   ┌──────────────────────────────┐
   │      PLAN PROCUREMENT PLAN    │ ⟋S24
   └──────────────────────────────┘
               │
               ▼
   ┌──────────────────────────────┐
   │        CALCULATE PROFIT       │ ⟋S25
   └──────────────────────────────┘
               │
               ▼
            ◇ S26
   No    IS PREDETERMINED
   ◄──── END CONDITION REACHED?
               │ Yes
               ▼
   ┌──────────────────────────────┐
   │   REGISTER ELECTRICITY CHARGE │ ⟋S27
   └──────────────────────────────┘
               │
               ▼
        ┌─────────────┐
        │     END     │
        └─────────────┘
```

# FIG. 17

DEMAND VARIATION ESTIMATION

```
                    ┌──────────────┐
                    │    START     │
                    └──────┬───────┘
                           │
                           ▼
        ┌──────────────────────────────────────────┐   S231
        │  ACQUIRE DEMAND·ELECTRICITY CHARGE        │
        └──────────────────┬───────────────────────┘
                           │
                           ▼
        ┌──────────────────────────────────────────┐   S232
        │       GENERATE CONSUMER GROUP             │
        └──────────────────┬───────────────────────┘
                           │
                           ▼
        ┌──────────────────────────────────────────┐   S233
        │  ACQUIRE OTHER COMPANY'S CHARGE           │
        │         MENU INFORMATION                  │
        └──────────────────┬───────────────────────┘
                           │
                           ▼
        ┌──────────────────────────────────────────┐   S234
        │  ACQUIRE DEMAND VARIATION TYPICAL         │
        │    INFORMATION FOR EACH CONSUMER          │
        └──────────────────┬───────────────────────┘
                           │
           ┌──────────────►│
           │               ▼
        ┌──────────────────────────────────────────┐   S235
        │     ESTIMATE GROUP DEMAND VARIATION       │
        └──────────────────┬───────────────────────┘
                           │
                           ▼
           No          ◇─────────────────────◇        S236
        ◄──────────────  ARE ALL GROUPS PROCESSED?
                         ◇─────────────────────◇
                           │
                           │ Yes
                           ▼
        ┌──────────────────────────────────────────┐   S237
        │            SUM UP DEMAND                  │
        └──────────────────┬───────────────────────┘
                           │
                           ▼
                    ┌──────────────┐
                    │     END      │
                    └──────────────┘
```

# FIG. 18

LONG TERM PLAN PLANNING

```
           START
             │
             ▼
┌──────────────────────────────────┐  S31
│ ACQUIRE DEMAND·CHARGE UNIT PRICE  │
└──────────────────────────────────┘
             │
             ▼
┌──────────────────────────────────┐  S32
│  SHAPING OF DATA FOR EACH DAY     │
└──────────────────────────────────┘
             │
             ▼
┌──────────────────────────────────┐  S33
│   SIMILAR DATE CLASSIFICATION     │
└──────────────────────────────────┘
             │
             ▼
┌──────────────────────────────────┐  S34
│ DETERMINE REPRESENTATIVE DEMAND   │
│ ·CHARGE UNIT PRICE FOR EACH DAY   │
└──────────────────────────────────┘
             │
             ▼
┌──────────────────────────────────┐  S35
│      CALCULATE PROFIT FOR DAY     │
└──────────────────────────────────┘
             │
             ▼
┌──────────────────────────────────┐  S36
│    CALCULATE PROFIT FOR PERIOD    │
└──────────────────────────────────┘
             │
             ▼
         ◇ S37
   No   IS PREDETERMINED END
 ◀───── CONDITION REACHED?
             │ Yes
             ▼
┌──────────────────────────────────┐  S38
│    REGISTER ELECTRICITY CHARGE    │
└──────────────────────────────────┘
             │
             ▼
            END
```

## FIG. 19

| | VARIATION SENSITIVITY IN TIME AXIS DIRECTION | VARIATION SENSITIVITY IN SAME TIME ZONE |
|---|---|---|
| LOW VOLTAGE | | |
| HIGH VOLTAGE | | |
| ... | | |

# FIG. 20

*FIG. 21*

# FIG. 22A

# FIG. 22B

Europäisches
Patentamt

European
Patent Office

Office européen
des brevets

**EUROPEAN SEARCH REPORT**

Application Number

EP 19 16 1599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 104 323 A1 (HITACHI LTD [JP]) 14 December 2016 (2016-12-14) * abstract; figures 4, 9, 26, 28 * * paragraph [0006] * ----- | 1-15 | INV. G06Q10/04 G06Q50/06 |
| | | | TECHNICAL FIELDS SEARCHED (IPC) G06Q |

The present search report has been drawn up for all claims

| Place of search | Date of completion of the search | Examiner |
|---|---|---|
| Munich | 4 April 2019 | Haitof, Houssam |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 16 1599

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2019

| Patent document cited in search report | | Publication date | Patent family member(s) | Publication date |
|---|---|---|---|---|
| EP 3104323 | A1 | 14-12-2016 | EP 3104323 A1<br>JP 2017004312 A<br>US 2016364807 A1 | 14-12-2016<br>05-01-2017<br>15-12-2016 |

For more details about this annex : see Official Journal of the European Patent Office, No. 12/82

**EP 3 570 224 A1**

**Patent documents cited in the description**

- JP 2016071383 A